# EUROPEAN PATENT APPLICATION

(11) **EP 0 733 563 A1**
(43) Date of publication of application: **25.09.1996**
(21) Application number: 96104507.7
(22) Date of filing: 21.03.1996
(51) Int. Cl.: B65G 1/04, B66F 9/14

(54) **Merchandise handling equipment and merchandise storage equipment**

(30) Priority: 22.03.1995 JP 62975/95; 20.04.1995 JP 95375/95; 28.06.1995 JP 162178/95
(71) Applicant: TOYOKANETSU KABUSHIKI KAISHA, Kohtoh-ku, Tokyo (JP)
(72) Inventor: Yokoya, Juji, c/o Toyokanetsu K.K., Tokyo (JP)
(74) Representative: Harwardt, Günther

(57) **Abstract**

The invention concerns a merchandise handling equipment, which is able to handle merchandise without moving the merchandise to a bucket or the like and is also able to enhance the storage efficiency of the merchandise. The merchandise handling equipment (5) is made up of a carriage (9) including a pallet (8) for placing merchandise (7) thereon and runnable along a shelf plate (10), a pair of left and right extendable and contractible fork members (13,14) respectively disposed in either side end portion of the pallet, a fork width adjusting mechanism (11) for adjusting a mutually spaced distance between the pair of left and right fork members, and a fork extending and contracting mechanism (12) for expanding and contracting the pair of left and right fork members substantially horizontally from the carriage to the shelf plate or vice versa, in which the pair of left and right fork members are operated to hold the merchandise between them and then the pair of left and right fork members are extended and contracted to thereby move the merchandise from one of the pallet and shelf plate to the other.

## Description

### BACKGROUND OF THE INVENTION

The present invention relates to a merchandise handling equipment for handling or moving merchandise between itself and a flat shelf plate in a warehouse or the like, and merchandise storage equipment for moving the merchandise from the merchandise handling equipment to the flat shelf plate or vice versa.

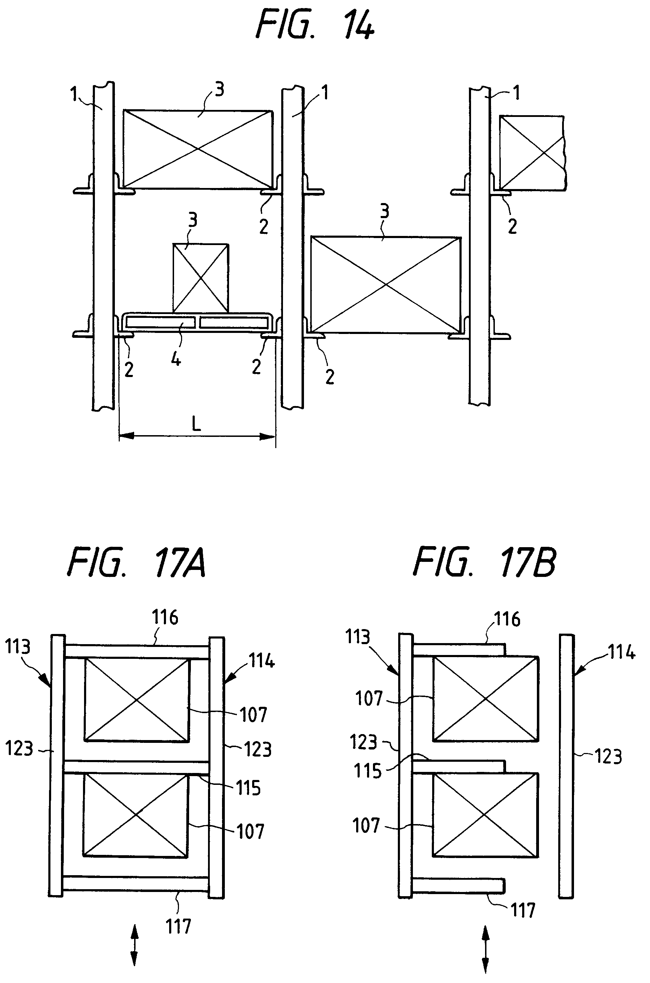

Conventionally, as merchandise handling equipment which is used to move and put merchandise onto shelves in a warehouse or the like, there are developed various kinds of merchandise handling equipment having a structure arranged to scoop up the bottom surface of the merchandise by use of fork members. And, as a shelf for storing thereon the merchandise handled by the merchandise handling equipment having such structure, as shown in Fig. 14, there is developed a shelf having a structure in which only the two side ends of the bottom surface of the merchandise 3 are supported by L-shaped steel members 2 which are fixed to props 1 respectively.

However, such shelf structure raises some problems as follows:
(1) When the merchandise 3 having a smaller width dimension than a space L between two mutually adjoining L-shaped steel members 2, there is required a separately formed pallet 4 or bucket having a width dimension substantially equivalent to a distance between the two adjoining L-shaped steel members 2 and, when the bucket is used, there is further necessary a special device which is used to carry the merchandise into and out of the bucket.
(2) When the width dimension of the merchandise 3 matches the space L between the two adjoining L-shaped steel members 2, the merchandise 3 can be put directly onto the L-shaped steel members 2 without using the pallet 4 or bucket. However, if the merchandise 3 is stored in a corrugated cardboard case, there is a danger that the bottom of the case can be deformed or can fall out while the merchandise 3 is in storage.
(3) Since the space between the two adjoining L-shaped steel members 2 is fixed and thus uses a constant space regardless of the size of the merchandise 3, the wasteful use of the space is increased.

In order to solve the above problems, recently, the shelf for storing the merchandise thereon is formed in a flat shelf structure in which the merchandise is placed on a flat shelf and, to match such shelf structure, the merchandise handling equipment is improved in various manners.

For example, as merchandise handling equipment suitable for a flat shelf, there is developed merchandise handling equipment which comprises: a carriage including a merchandise placement table or a pallet and movable along the shelf; and, merchandise gripping means provided in the carriage for gripping the merchandise.

However, any of the merchandise gripping means of the merchandise handling trucks developed so far is structured such that a bucket of a prescribed size can be gripped by means of securing arms (securing claws) provided at a given position in the carriage and, thus, there is necessary an operation to previously carry the merchandise to be handled into the bucket of a prescribed size even if the merchandize is packed in a carton case.

Also, since the dimension of the bucket used for such handling is determined according to the maximum dimension of the merchandise to be handled and the merchandise is stored on the shelf plate in buckets, when the merchandise to be stored is of a small size, then the wasteful use of the storage space is increased due to use of the buckets, so that the storage efficiency of the shelf plate is decreased to a great extent.

A so-called has also been developed as a merchandise handling or moving equipment, which can fit such flat shelf structure that the merchandise is placed on a flat shelf plate.

For example, as a stacker crane for use with a flat shelf, in Japanese Patent Publication No. 6-345214 of Heisei, there is disclosed a stacker crane in which two merchandise pull-in/push-out arms projectable forwardly or backwardly of the merchandise when rotated are provided in the front and rear ends of an advanceable and retreatable member structured so as to be able to advance into or retreat from a clearance between two adjoining pieces of merchandise stored on a shelf plate, and the merchandise on the shelf plate can be pushed out and moved by the pull-in/push-out arms. Also, in Japanese Patent Publication No. 7-25415 of Heisei, there is disclosed a stacker crane in which a sucking disc for sucking thereto the merchandise on the shelf plate is provided in such a manner that it is movable in the back and forth direction as well as in the horizontal direction, and the merchandise can be moved by operating or moving the sucking disc.

However, in the stacker crane of a type disclosed in Japanese Patent Publication No. 6-345214 of Heisei, since a mechanism and a drive source for rotating the merchandise pull-in/push-out arms must be provided within the advanceable and retreatable member, the advanceable and retreatable member becomes thick.

Due to this, in order to be able to insert the advanceable and retreatable member, it is indispensable to widen a clearance to be secured between the two adjoining pieces of merchandise on the shelf plate, which leads to the lowered efficiency of storage of the merchandise on the shelf plate.

On the other, in the stacker crane of a type disclosed in Japanese Patent Publication No. 7-25415 of Heisei, since the sucking disc does not work when the merchandise is stored in a case with holes, the kinds of the merchandise to be moved are limited. Also, because there is employed such a mechanism that the sucking disc is advanced and retreated, the structure is easy to increase in size in the advancing and retreating direction of the sucking disc and, therefore, when the stacker crane is made to run between the shelf lines, it is necessary to widen a clearance between the shelf lines.

### SUMMARY OF THE INVENTION

In view of the above, the present invention aims at eliminating the drawbacks found in the above-mentioned conventional merchandise handling equipment. Accordingly, it is an object of the invention to provide a merchandise handling truck and merchandise storage equipment in which the merchandise to be handled, if it is packed in a carton case or the like, need not be carried into a bucket of a prescribed size or the like but can be handled or moved as it is to thereby be able to enhance the operation efficiency, the size of the merchandise to be handled is not limited to a specific one to thereby be able to handle a great variety of merchandise, and the wasteful use of the storage space on the shelf plate is eliminated to thereby be able to improve the storage efficiency of the shelf plate.

It is another object of the invention to provide a merchandise handling equipment and merchandise storage equipment which can move merchandise even if the merchandise is stored in a case with holes, is able to reduce a clearance between two mutually adjoining pieces of merchandise on a shelf plate as well as can reduce a clearance between two adjoining shelf lines, and can improve the storage efficiency of the merchandise in a warehouse or the like.

The above object of the invention can be achieved by the following structure:
(1) A merchandise handling equipment, comprising:
   a carriage including a pallet for placing merchandise thereon and movable along shelves and/or in the stacking direction of shelves;
   a pair of left and right extendable and contractible fork members respectively provided in either side end portion of the pallet;
   a fork width adjusting mechanism for adjusting a mutually spaced distance between the pair of left and right fork members;
   and,
   a fork extending and contracting mechanism for extending and contracting the pair of left and right fork members almost horizontally from the carriage to the shelf plate and vice versa,
   wherein the pair of left and right fork members are operated to hold the merchandise between them and the pair of left and right fork members are then extended and contracted to thereby move the merchandise from one of the pallet and the shelf plate to the other.
(2) Merchandise storage equipment for moving the merchandise from one of the pallet and the shelf plate to the other using a merchandise handling truck as set forth in the article, wherein the shelf plates are arranged in multi-stage layers and the merchandise handling truck is provided one in each of the multi-stage layers.
(3) Merchandise storage equipment as set forth in the article (2), wherein merchandise storing and shipping devices are respectively provided in the central portion of the shelf plate in the longitudinal direction thereof, a carry-in conveyor and a carry-out conveyor are provided one each on the opposite side of the shelf plate to the moving side of the merchandise handling truck in such a manner that the conveyors are both parallel to the shelf plate, and there are further provided inclinable tilt conveyors in such a manner that they can be extended between the carry-in and carry-out conveyors and the merchandise storing and shipping devices in each of the multi-stage layers.
   According to the above structure of the invention, since the movement of the merchandise from one of the pallet and shelf plate to the other is carried out by allowing the pair of left and right fork members to hold the merchandise between them and then by allowing the left and right fork members to be extended and contracted, if the merchandise to be moved is packed in a carton case or the like, then it is not necessary to transfer the merchandise into a bucket of a prescribed size, but the merchandise can be handled or moved directly as it is to thereby be able to enhance the operation efficiency; and, the size of the merchandise to be handled is not limited to a specific one but the invention can be used to handle or move a great variety of merchandise.
   Also, since the storage space on the shelf plate can be secured only by securing a space corresponding to the width dimension of the merchandise to be moved actually plus a space permitting the insertion of the fork members, and also since, if the merchandise to be moved is of a small size, then the storage space on the shelf space can be decreased by an amount corresponding to the reduced width dimension thereof, the wasteful use of the storage space on the shelf plate can be eliminated to thereby improve the storage efficiency accordingly.
   Further, because the shelf plates are arranged in a multi-stage layers and the merchandise handling truck is provided one in each of the multi-stage layers, the storing and shipping operations can be carried out at the same time in the respective multi-stage layers, which makes it possible to store and ship a large quantity of merchandise efficiently.
   In addition, since receiving and shipping devices are respectively provided in the central portion of the shelf plate in the longitudinal direction thereof, a carry-in conveyor and a carry-out conveyor are provided one each on the opposite side of the shelf plate to the moving or running side of the merchandise handling truck in such a manner that the conveyors are parallel to the shelf plate, and there are further provided inclinable tilt conveyors in such a manner that they can be extended between the carry-in and carry-out conveyors and the merchandise storing and shipping devices in each of the multi-stage layers, the running distance of the merchandise handling truck can be shortened to thereby be able to further improve the storing and shipping efficiency of the merchandise. Also, because the suitable shelf plate for the merchandise to be moved can be selected by inclining the tilt conveyors, the merchandise can be moved efficiently with a simple structure.
   The present invention further provides:
(4) A merchandise handling equipment, comprising:
   a carriage including a pallet for placing merchandise thereon and runnable in the height direction of a shelf and in the extending direction of a shelf plate;
   a pair of left and right fork members respectively disposed in the side end portions of the pallet, advanceable and retreatable substantially horizontally from the carriage to the shelf plate, and supported in such a manner that they are spaced from each other by a distance larger than the right-and-left direction length dimension of the merchandise to be moved; and,
   front and rear push rods respectively interposed between the left and right fork members in such a manner that they are spaced from each other a distance greater than the back-and-forth length dimension of the merchandise to be moved, and cooperating with the left and right fork members in forming a frame to enclose the periphery of the merchandise,
   wherein the movement of said merchandise from one of the pallet and the shelf plate to the other is carried out by advancing and retreating the left and right fork members and by allowing the merchandise to slide on the pallet or on the shelf plate by use of the front and rear push rods pressed against the front end or rear end of the merchandise.
(5) A merchandise handling equipment, comprising:
   a carriage including a pallet for placing merchandise thereon and runnable in the height direction of a shelf and in the extending direction of a shelf plate;
   a pair of left and right fork members respectively disposed in the side end portions of the pallet, advanceable and retreatable substantially horizontally from the carriage to the shelf plate, and supported in such a manner that they are spaced from each other by a distance larger than the right-and-left direction length dimension of the merchandise to be moved;
   front and rear push rods respectively interposed between the left and right fork members; and,
   at least one intermediate push rod situated between the front and rear push rods and interposed between the left and right fork members, and cooperating with the left and right fork members and the front and rear push rods in forming a plurality of frames to enclose the periphery of the merchandise,
   wherein the movement of the merchandise from one of the pallet and the shelf plate to the other is carried out by advancing and retreating the left and right fork members and by allowing a plurality of merchandise respectively stored in the depth direction of the shelf plate to slide individually or simultaneously on the pallet or on the shelf plate by use of the push rods pressed against the front end or rear end of the merchandise.
(6) A merchandise moving method in which, by use of a merchandise handling equipment comprising a carriage including a pallet for placing merchandise thereon and runnable in the height direction of a shelf and in the extending direction of a shelf plate, the merchandise is moved from one of the pallet and shelf plate to the other, the method comprising the steps of:
   advancing and retreating a plurality of frames, which respectively enclose the periphery of the merchandise and are arranged in the depth direction of the shelf plate, substantially horizontally between the carriage and the shelf plate; and,
   pressing push rods forming part of the frame against the front end or rear end of the merchandise to thereby allow a plurality of merchandise respectively stored in the depth direction of the shelf plate to slide individually or simultaneously on the pallet or on the shelf plate.
   According to the above structure of the invention, the movement of the merchandise from one of the pallet and shelf plate to the other is carried out by advancing and retreating the fork members and by allowing the merchandise to slide on the pallet or on the shelf plate by means of the push rods pressed against the front end or rear end of the merchandise. Thanks to this, when compared with the structure disclosed in Japanese Patent Publication No. 7-25415 of Heisei that holds the merchandise by sue of the sucking disc, the movement of the merchandise can be carried out with no trouble even when the merchandise is stored in a case with holes.
   Also, according to the structure of the invention, since the push rods used to push out the merchandise are fixed to and supported by the fork members, when compared with the structure disclosed in Japanese Patent Publication No. 6-345214 of Heisei in which the arms for pushing out the merchandise are arranged such that they are rotatable, there is eliminated the need to provide a mechanism and a drive source respectively used to drive the push rods on the fork members. Due to this, the fork members to be inserted into the clearances between the merchandise can be designed to be fine and compact so that the fork members require a small space, and the clearances between the merchandise on the shelf plate can be minimized. That is, according to the structure of the invention, it is possible to enhance the storage efficiency of the merchandise on the shelf plate.
   Further, according to the structure of the invention, as the push rods, there are provided the front end and rear end push rods, while the pair of right and left fork members supporting these push rods and the front end and rear end push rods cooperate together in forming a frame for enclosing the periphery of the merchandise to be moved. Thanks to this, loads to be applied onto the fork members when the merchandise is pushed out are dispersed to the pair of right and left fork members, so that the strength to be secured for a fork member can be decreased and thus the fork member can be further reduced in diameter. This makes it possible to further reduce the clearance between the merchandise on the shelf plate.
   Moreover, according to the structure of the invention, since the fork members are arranged in such a 2-stage expansion and contraction structure as disclosed in Japanese Patent Publication No. 4-112129 of Heisei, even when compared with the structure disclosed in Japanese Patent Publication No. 7-25415 of Heisei in which the sucking disc is operated or moved, an increase in the dimension of the equipment in the moving direction of the merchandise can be reduced and the equipment can be thereby made compact. The compact structure of the equipment in turn makes it possible to narrow the clearance between the shelf lines.
   As described above, according to the invention, thanks to the reduced clearance between the merchandise on the shelf plate and the narrowed clearance between the shelf lines, it can be expected that the storage efficiency of the merchandise in a warehouse or the like can be improved to a great extent.
   The present invention further provides:
(7) A merchandise handling equipment, comprising:
   a carriage including a pallet for placing merchandise thereon and runnable in the height direction of a shelf and in the extending direction of a shelf plate;
   a pair of left and right fork members respectively provided in the two side end portions of the pallet;
   a fork width adjusting mechanism for adjusting a mutually spaced distance between the pair of left and right fork members;
   a fork advancing and retreating mechanism for advancing and retreating the pair of left and right fork members substantially horizontally from the carriage to the shelf plate; and,
   push rods respectively provided on and projected from the pair of left and right fork members in such a manner that, when merchandise is situated between the pair of left and right fork members, they can be situated in front of or in the rear of the merchandise, and cooperating with the pair of left and right fork members in forming a frame to enclose the periphery of the merchandise,
   wherein the movement of the merchandise from one of the pallet and the shelf plate to the other is carried out by advancing and retreating the pair of left and right fork members and by allowing the merchandise to slide on the pallet or on the shelf plate by means of the push rods pressed against the front end or rear end of the merchandise.
(8) A stacker crane as set forth in the article (7), in which each of the fork members includes a front end push rod provided on and projected from one end side of the fork member for pushing against the front end of the merchandise, a rear end push rod provided on and projected from the other end side of the fork member for pushing against the rear end of the merchandise, and at least one intermediate push rod provided on and projected from the fork member for subdividing a distance between the front end and rear end push rods, in which a frame formed by the front end and rear end push rods and the pair of left and right fork members for enclosing the periphery of the merchandise is subdivided by the intermediate push rod into a plurality of sub-frames respectively extending in the depth direction of the shelf plate, and wherein the intermediate push rod is supported in a vertically swingable manner by the fork members so that, when it is contacted with the merchandise by the merchandise securing operation of the carriage, it can be retreated in the vertical direction.
(9) By use of a stacker crane as set forth in the article (8), a method for moving merchandise from one of a pallet of the stacker crane and a shelf plate to the other, in which a plurality of the merchandise each having a size storable in one of a plurality of sub-frames subdivided by the intermediate push rod are arranged on the pallet or on the shelf plate in the depth direction of the pallet or shelf plate with a clearance corresponding to a clearance between the mutually adjoining two sub-frames of the plurality of sub-frames subdivided by the intermediate push rod, and the fork members are advanced and retreated substantially horizontally between the carriage and the shelf plate to thereby allow two or more pieces of the merchandise respectively placed in the depth direction of the shelf plate to slide individually or simultaneously on the pallet or on the shelf plate, in order to carry out the movement of the merchandise.
(10) A stacker crane as set forth in the article (7) or (8), in which each of the fork members includes a top fork, a second fork and a base fork, in which the upper and lower edges of the second fork are respectively formed as projecting portions each having a V-shaped section, the base fork comprises in the upper and lower portions thereof guide rollers each including a V-section groove engageable with the V-shaped projecting portion, and the guide rollers hold the second fork between them from top and bottom in such a manner that the second fork can run, in which the top fork also includes a guide roller having a V-section groove, the second fork includes a cut-away portion serving as a passage through which the guide roller of the top fork runs, the upper and lower edges of the inner surfaces of the cut-away portion are formed as V-section projecting portions engageable with the guide roller, and the V-section projecting portions hold the guide roller of the top fork between them from top and bottom in such a manner that the guide roller can run, and in which the second fork includes in the two running direction ends thereof pulleys with their rotation surfaces respectively inclined with respect to a vertical surface in mutually different directions, wires extending over the pulleys are fixed on the same side of the top fork and base fork, and, if the second fork is expanded and contracted, then the top fork can also be expanded and contracted.
   According to the above-mentioned structure of the invention, since the movement of the merchandise from one of the pallet and shelf plate to the other is carried out by advancing and retreating the fork members and by allowing the merchandise to slide on the pallet or on the shelf plate by use of the push rods pressed against the front end or rear end of the merchandise, when compared with the structure disclosed in Japanese Patent Publication No. 7-25415 of Heisei in which the merchandise is held by use of the sucking disc, the merchandise can be moved without any trouble even when the merchandise is stored in a case with holes.
   Also, because the push rods for pushing out the merchandise are basically fixed to and supported by the fork members, when compared with the structure disclosed in Japanese Patent Publication No. 6-345214 of Heisei in which the arms for pushing out the merchandise are arranged such that they can be rotated, there is eliminated the need to provide on the fork members a mechanism and a drive source which are respectively used to drive the push rods. Due to this, the fork members to be inserted into the clearance between two or more pieces of the merchandise can be designed to be fine so that they require small space, which in turn can minimize the clearance between the two or more pieces of the merchandise respectively placed on the shelf plate to thereby improve the storage efficiency of the merchandise on the shelf plate.
   Further, since the distance between the pair of left and right fork members can be adjusted, the two or more pieces of the merchandise placed on the shelf plate can be stored with a clearance S which permits the insertion of the fork members, that is, while the merchandise is squeezed up closer to each other. This eliminates a waste of space that, even when the merchandise to be stored on the shelf plate is of a small size, the same storage space to be allotted to the merchandise of a large size is allotted to the small-size merchandise, which in turn makes it possible to enhance further the storage efficiency of the merchandise in a warehouse or the like.
   Still further, the front end and rear end push rods are provided as the push rods, while the front end and rear end push rods and the pair of left and right fork members respectively supporting these push rods cooperate together in forming a frame for enclosing the periphery of the merchandise to be moved. Due to this, the loads to be applied to the fork members when the merchandise is pushed out can be dispersed to the pair of left and right fork members to thereby decrease the strength to be secured for one fork member, which makes it possible to reduce further the diameters of the fork members. This makes it possible to decrease further the clearance between the two or more pieces of the merchandise stored on the shelf plate.
   Yet further, according to the invention, in each of the fork members, there is employed such a 2-stage expansion and contraction structure as disclosed in Japanese Patent Publication No. 4-112129 of Heisei. Due to the employment of the 2-stage expansion and contraction structure, even when compared with the structure disclosed in Japanese Patent Publication No. 7-25415 of Heisei, an increase in the size of the stacker crane in the moving direction of the merchandise can be reduced to thereby make the stacker crane compact. The compact stacker crane makes it possible to narrow the clearance between the shelf lines.
   Therefore, thanks to the reduced clearance between the two or more pieces of the merchandise on the shelf plate and the narrowed clearance between the shelf lines, it can be expected that the storage efficiency of the merchandise in a warehouse or the like can be enhanced greatly.
   In addition, according to the invention, an intermediate push rod may be provided between the front end and rear end push rods respectively provided on and projected from the fork members, and a plurality of frames each enclosing the periphery of the merchandise are arranged in the depth direction of the shelf plate. In this case, a plurality of merchandise stored in the depth direction of the shelf plate can be drawn onto the pallet at the same time to thereby enhance the merchandise moving efficiency. Also, when the merchandise on the pallet is to be moved onto the shelf plate, two or more pieces of the merchandise can be moved at the same time, which can also improve the merchandise moving efficiency. In addition, since the two pieces of merchandise are separated by the intermediate push rod, in the depth direction of the shelf plate, there are formed clearances between the two or more pieces of the merchandise that have been moved onto the shelf plate. Thanks to this, when taking out the merchandise from the shelf plate next, the front end push rod can be inserted easily between the two or more pieces of the merchandise stored in the depth direction of the shelf plate and, also when the merchandise is taken out one by one, the merchandise can be moved easily. This means that the invention can provide an excellent merchandise handling efficiency.

### BRIEF DESCRIPTION OF THE DRAWINGS

In the accompanying drawings:
Fig. 1 is a perspective view of a first embodiment of merchandise handling equipment according to the invention;
Fig. 2 is a plan view of the first embodiment of the merchandise handling equipment according to the invention;
Fig. 3 is a side view of the first embodiment of the merchandise handling equipment according to the invention;
Fig. 4 is an enlarged perspective view of a merchandise handling truck or carriage portion of the merchandise handling equipment according to the first embodiment of the invention;
Figs. 5A to 5C are explanatory views of the operation of the first embodiment of the merchandise handling equipment according to the invention;
Figs. 6A and 6B are explanatory views of the operation of the first embodiment of the merchandise handling equipment according to the invention;
Fig. 7 is an explanatory view of the operation of the first embodiment of the merchandise handling equipment according to the invention;
Fig. 8 is a section view taken along the line 8-8 shown in Fig. 7;
Fig. 9 is a plan view of a second embodiment of merchandise handling equipment according to the invention;
Fig. 10 is a side view of the second embodiment of merchandise handling equipment according to the invention;
Fig. 11 is a plan view of a third embodiment of merchandise handling equipment according to the invention;
Fig. 12 is a side view of the third embodiment of merchandise handling equipment according to the invention;
Fig. 13 is a perspective view of the third embodiment of merchandise handling equipment according to the invention;
Fig. 14 is an explanatory view of a conventional shelf structure;
Fig. 15 is a perspective view of a merchandise handling carriage portion or stacker crane according to f fourth embodiment of the invention;
Figs. 16A to 16E are explanatory views of the operation of the above embodiment shown in Fig. 15;
Fig. 17A and 17B are plan views of modifications for the merchandise handling carriage portion or stacker crane according to the invention;
Fig. 18 is a perspective view of a merchandise handling carriage portion or stacker crane according to a fifth embodiment of the invention;
Figs. 19A to 19C are explanatory views of the operation of the fifth embodiment of the invention;
Figs. 20A to 20C are explanatory views of the operation of the fifth embodiment of the invention;
Fig. 21 is a perspective view of a modification for a front end push rod and a rear end push rod respectively provided in fork members employed in the fifth embodiment of the invention;
Fig. 22 is a perspective view of a merchandise handling carriage portion or stacker crane according to a sixth embodiment of the invention;
Fig. 23 is a section view taken along the line 23-23 shown in Fig. 23;
Fig. 24 is an arrow view when viewed from a direction of an arrow B shown in Fig. 23;
Fig. 25 is a perspective view of a wire connecting mechanism employed in the sixth embodiment, showing how wires are extended;
Figs. 26A and 26B are explanatory views of the operation of the sixth embodiment shown in Fig. 22;
Figs. 27A and 27B are explanatory views of the operation of the sixth embodiment shown in Fig. 22;
Fig. 28 is a perspective view of a modification for the sixth embodiment shown in Fig. 22;
Fig. 29 is a front view of the main portions of a carriage portion according to a seventh embodiment of the invention;
Fig. 30 is a front view of the operation of the seventh embodiment shown in Fig. 29;
Fig. 31 is a plan view of the operation of the seventh embodiment shown in Fig. 29;
Figs. 32A and 32B are front views showing the operation of a modification of the seventh embodiment shown in Fig. 29;
Fig. 33 is a side view of a merchandise handling equipment constituted by the combination of the first and fifth embodiments of the invention;
Fig. 34 is a plan view of the merchandise handling equipment as viewed along an arrow 34 of Fig. 33.

### DETAILED DESCRIPTION OF THE PREFERRED EMBODIMENTS

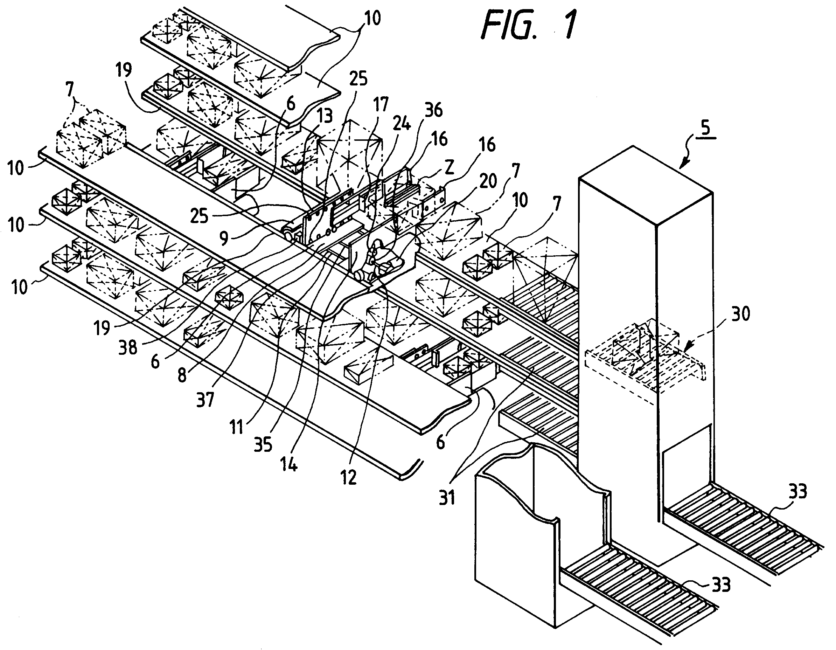

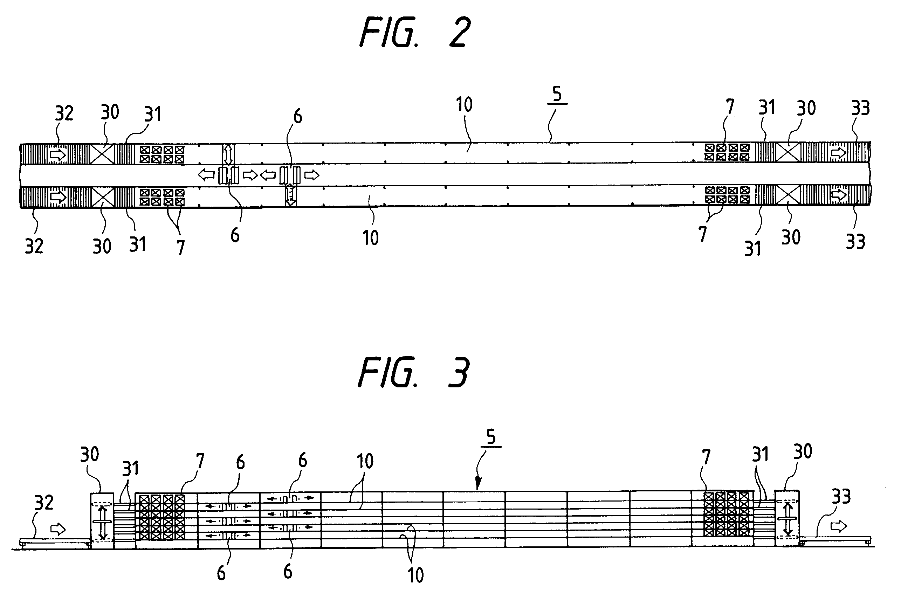

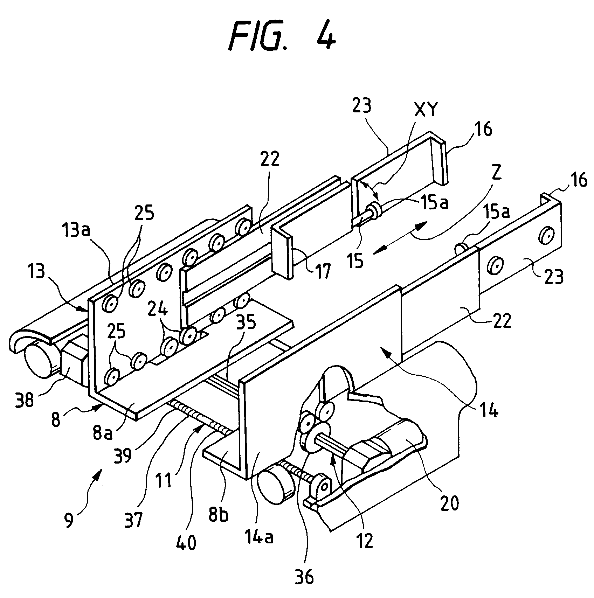

Now, Figs. 1 to 4 show a first embodiment of merchandise handling equipment according to the invention. In particular, Fig. 1 is a perspective view of the main portions of the merchandise handling equipment 5 according to the first embodiment of the invention, Fig. 2 is a plan view of the merchandise handling equipment 5 according to the first embodiment of the invention, Fig. 3 is a side view of the merchandise handling equipment 5, and Fig. 4 is an enlarged perspective view of the main portions of a merchandise handling truck employed in the first embodiment of the invention.

The merchandise handling equipment 5 according to the first embodiment is a flat shelf type of merchandise handling equipment in which shelf plates 10 are arranged in multi-stage layers (in the illustrated embodiment, 6-stage layers) and a merchandise handling truck or carriage portion 6 is provided one in each of the multi-stage layers, the truck 6 being used to handle or move and put merchandise 7 onto each of the shelf plates 10.

Also, in the two end portions of the shelf plates 10 in the respective multi-stage layers, there are provided lifters 30 which are used to raise up and fall down the merchandise 7 to a given stage layer, and buffer conveyors 31 which are respectively used to put the merchandise 7 onto the lifter 30 and take out the merchandise 7 from the lifter 30 as well as provide temporary storage parts for storing thereon the merchandise 7 which is stored and shipped.

To each of the lifters 30, there are connected a merchandise storing conveyor 32 which is used to load the merchandise 7 onto the lifter 30 and a merchandise shipping conveyor 33 used to take down the merchandise 7 from the lifter 30.

Further, the merchandise 7 having a small depth dimension is arranged in a plurality of lines (in the illustrated embodiment, in two lines) in the depth direction of the shelf plate 10.

And, as shown in Fig. 4 as well, the merchandise handling truck 6 comprises a carriage 9 including a pallet 8 for placing the merchandise 7 thereon, a pair of left and right extendable and contractible fork members 13, 14 respectively provided in the two side end portions of the pallet 8, a fork width adjusting mechanism 11 for adjusting a mutually spaced distance between the pair of left and right fork members 13 and 14, a fork extending and contracting mechanism 12 for extending and contracting the pair of left and right fork members 13, 14 almost horizontally from the carriage 9 to the shelf plate 10 or vice versa, and front and rear end projecting members 16, 17 which are respectively provided on and projected from the front and rear ends of each of the left and right fork members 13, 14 in such a manner that they can be respectively situated in front of and in the rear of the merchandise 7 when the merchandise 7 is situated between the pair of left and right fork members 13 and 14.

In the present embodiment, the pallet 8, as shown in Fig. 4, is made up of two flat plates 8a and 8b which are divided right and left, and the flat plates 8a and 8b are respectively formed integral with base forks 13a and 14a which are the composing elements of the fork members 13 and 14 corresponding to the flat plates 8a and 8b.

Also, the carriage 9 is arranged so as to run on a rail 19 provided along the front end portion of each of the shelf plates 10, that is, the carriage 9 is arranged such that it can be moved to an arbitrary position in the shelf plate 10.

The pair of left and right members 13 and 14, as shown in Fig. 4, respectively comprise the base forks 13a and 14a formed integral with the respective flat plates 8a and 8b of the pallet 8, second forks 22 supported on the shelf plate side 10 in such a manner that they can be advanceable and retreatable on the base forks 13a and 14a through guide rollers 25 supported rotatably on the base forks 13a and 14a, and top forks 23 which can be moved in such a manner that they can advance and retreat on the second forks 22 in linking with the advancing and retreating movements of the second forks 22. And, the left and right members 13 and 14 are structured such that they can be extended and contracted.

The fork extending and contracting mechanism 12 extends and contracts the fork members 13 and 14 to thereby advance and retreat the top forks 23 on the shelf plate 10 side. And, the fork extending and contracting mechanism 12 comprises a drive motor 20 provided on the carriage 9, a spline shaft 35 which can be driven or rotated by the drive motor 20, pinion gears 24 which are supported rotatably on the base forks 13a and 14a and also which are meshable with drive gears 36 on the spline shaft 35 and thus can be rotated in linking with the spline shaft 35, rack gears (not shown) respectively formed integral with the lower end portions of the second forks 22 and meshable with the pinion gears 24, and wire connecting mechanisms (not shown) which, when the second forks 22 are caused to advance and retreat with respect to the base forks 13a and 14a by the rotational movements of the pinion gears 24, links the second forks 22 and top forks 23 with each other such that the top forks 23 can advance and retreat on the second forks 22 in linking with the advancing and retreating movements of the second forks 22.

The above-mentioned wire connecting mechanism (not shown) for connecting the top fork 23 with the advancing and retreating movements of the second fork 22 employs an extending and contracting structure of a two-stage type that is disclosed in Japanese Patent Publication No. 4-112129 of Heisei, in which, when the second fork 22 is extended from the pallet 8 to the maximum, the top fork 23 is extended from the second fork 22 to the maximum and, when the second fork 22 returns back to its initial position on the pallet 8, the top fork 23 is stored within the second fork 22.

By means of the fork extending and contracting mechanism 12, the top fork 23 can be advanced from the pallet 8 to the shelf plate 10 and retreated from the shelf plate 10 to the pallet 8 almost horizontally along the depth direction (Z) of the shelf plate 10.

The fork width adjusting mechanism 11 comprises a ball screw shaft 37 and a drive motor 38 which is used to drive and rotate the ball screw shaft 37. The ball screw shaft 37, as shown in Fig. 4, includes a left hand screw 39 and a right hand screw 40 which are respectively formed in the left and right end portions thereof. The left hand and right hand screws 39 and 40 are respectively in threaded engagement with blocks respectively formed integral with the flat plates 8a and 8b, so that the mutual space between the base forks 13a and 14a respectively formed integral with the flat plates 8a and 8b can be adjusted in accordance with the directions of rotation of the ball screw shaft 37.

The front and rear end projecting members 16 and 17, in the present first embodiment, are respectively formed by bending inwardly the front and rear end portions of the top forks 23.

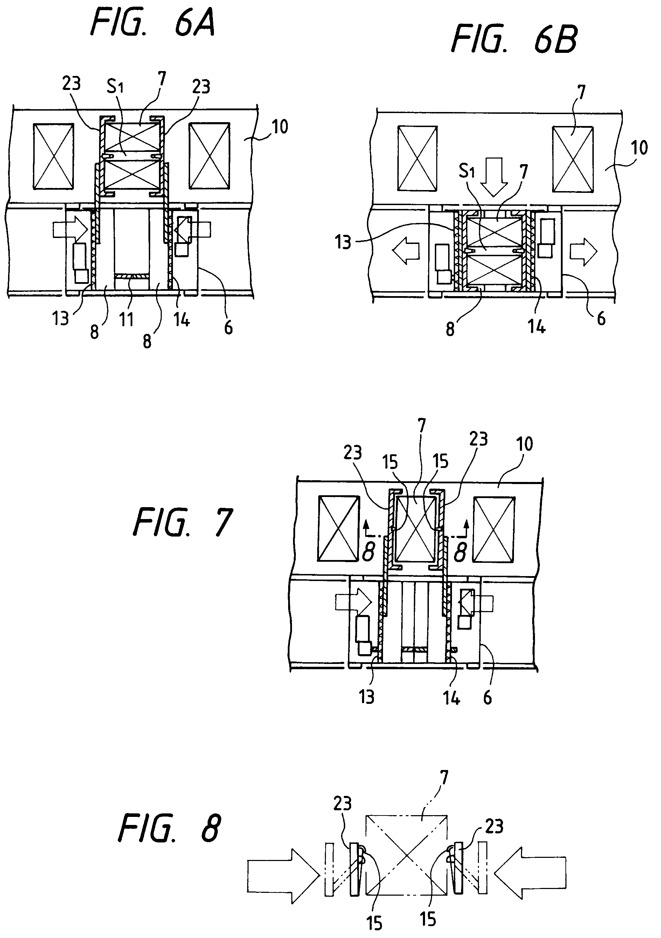

Also, according to the present first embodiment, in the intermediate portions of the left and right top forks 23, there are provided intermediate projecting members 15, respectively. Each of the intermediate projecting members 15 is provided on and projected from the top fork 23 so that it can subdivide the distance between the front and rear end projecting members 16 and 17 provided in each of the right and left top forks 23 and, as shown in Fig. 4, the intermediate projecting member 15 is supported on the top fork 23 in such a manner that it can be swung or rotated in the vertical direction (XY). In particular, normally, it is rotated due to its own weight so that the leading end portion thereof projects inwardly. On the other hand, when trying to hold the merchandise 7 by and between the pair of left and right fork members 13 and 14, if the leading end of the intermediate projecting member 15 is contacted against the merchandise 7, as shown in Figs. 4 and 8, the intermediate projecting member 15 is rotated and retreated upwardly from the merchandise 7, so that the intermediate projecting member 15 does not interfere with the holding of the merchandise 7 by the top forks 23.

Further, in order not to damage the case of the merchandise 7 to be moved, as shown in Fig. 4, each of the intermediate projecting members 15 includes a roller 15a in the leading end portion thereof.

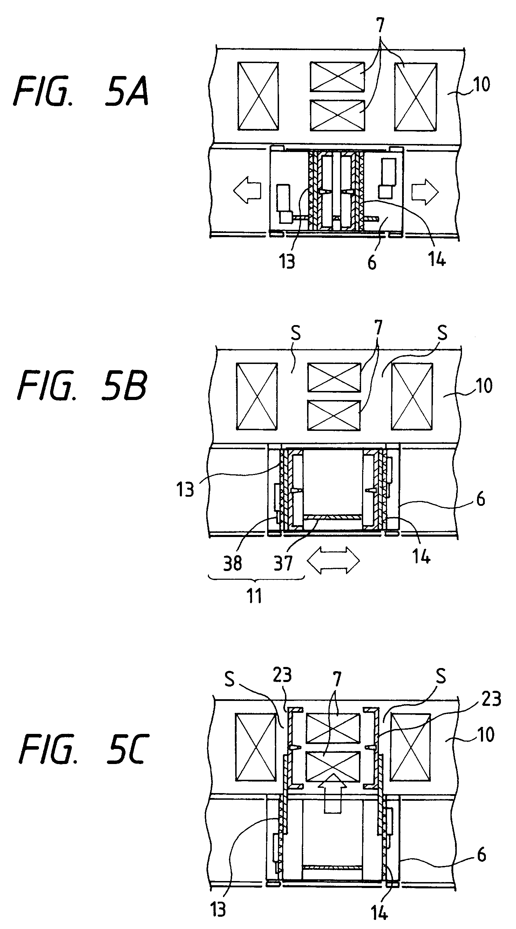

In the merchandise handling truck 6, the handling operation of the merchandise 7 is carried out in such a manner as shown in Figs. 5A to 7.

When moving the merchandise 7 on the shelf plate 10 to the pallet 8 of the merchandise handling truck 6, at first, as shown in Fig. 5A, the merchandise handling truck 6 is moved to a position in front of the merchandise 7 to be moved onto the shelf plate 10.

Next, as shown in Fig. 5B, the fork width adjusting mechanism 11 is operated to adjust the distance between the left and right fork members 13 and 14 to be slightly greater than the width dimension of the merchandise 7 to be moved (in this case, the merchandise 7 of a small size arranged in two lines in the depth direction of the shelf plate 10).

Then, as shown in Fig. 5C, the left and right fork members 13 and 14 are extended by use of the fork extending and contracting mechanism 12 and the top forks 23 are projected into spaces S which are respectively formed in the two sides of the merchandise 7 to be handled.

After then, as shown in Fig. 6A, the space between the left and right fork members 13 and 14 is narrowed and thus the pieces of the merchandise 7, 7 to be moved are respectively held by and between the top forks 23. Next, as shown in Fig. 6B, the pair of left and right fork members 13 and 14 are contracted and thus the pieces of the merchandise 7, 7 held by the top forks 23 and 23 are respectively put onto the pallet 8 of the merchandise handling truck 6.

As shown in Figs. 6A and 6B, when the merchandise 7 is of a small size and is arranged in the depth direction of the shelf plate 10, the intermediate projecting members 15 are inserted into a space S₁ between the pieces of the merchandise 7, 7 respectively arranged in the depth direction of the shelf plate 10 and functions as a separator to prevent the space S₁ from being disarranged while the pieces of the merchandise 7 are being handled or moved.

Also, the front and rear end projecting members 16 and 17, which are respectively provided in the front and rear end portions of each of the top forks 23, respectively serve as stoppers to prevent the pieces of the merchandise 7, 7 held by and between the top forks 23, 23 from slipping off from between the top forks 23, 23 when the left and right fork members 13 and 14 are extended and contracted.

Therefore, when a piece of the merchandise 7 is held by the top forks 23, the piece of the merchandise 7 may be pressed by the top forks 23 in such a manner that the piece of the merchandise 7 being held during the extension and contraction of the left and right fork members 13, 14 can slide on the shelf plate 10 without wobbling. That is, for this purpose, there is not necessary such a great holding force as can lift up the piece of the merchandise 7. Thus, the drive motor 38, which is the drive source of the fork width adjusting mechanism 11, can be reduced in size accordingly.

When the merchandise 7 stored in a line on the shelf plate 10 is moved to the pallet 8 of the merchandise handling truck 6, the intermediate projecting members 15 are contacted with the side surfaces of the merchandise 7 when the merchandise 7 is held by and between the pair of top forks 23. However, in this case, the intermediate projecting members 15 contacted with the side surfaces of the merchandise 7, as shown in Figs. 7 and 8, are respectively rotated and retreated upwardly so that they do not interfere with the holding of the merchandise 7 by the top forks 23, 23.

On the other hand, when the merchandise 7 put on the pallet 8 of the merchandise handling truck 6 is to be moved to the shelf plate 10, the moving or handling operation may be performed in the reverse procedure to the above-mentioned procedure provided when the merchandise 7 is moved from the shelf plate 10 to the merchandise handling truck 6.

As described above, in the merchandise handling equipment 5 according to the first embodiment, the movement of the merchandise 7 from one of the pallet 5 of the merchandise handling truck 6 and the shelf plate 10 to the other is carried out by allowing the left and right fork members 13 and 14 to hold the merchandise 7 between them and then by allowing the left and right fork members 13 and 14 to perform their own extension and contraction operations. Thanks to this, if the merchandise 7 to be moved is packed in a carton case or the like, then it is not necessary to move the merchandise 7 to a bucket or the like of a specific size but the merchandise 7 can be moved directly as it is, so that the efficiency of the merchandise handling operation can be improved.

Also, the size of the merchandise 7 to be moved is not limited to a specific size but the present merchandise handling equipment can also be used in handling or moving a wide variety of merchandise.

Further, as the storage space on the shelf plate 10, it is sufficient to secure a space which corresponds to the actual width dimension of the merchandise plus a space permitting the insertion of the fork members 13 and 14 and, for the merchandise of a small size, the storage space on the shelf plate 10 can be reduced by an amount corresponding to the reduction in size of the merchandise. This eliminates the wasteful use of the storage space on the shelf plate 10 to thereby be able to enhance the storage efficiency of the shelf plate 10.

Moreover, the merchandise handling equipment according to the first embodiment of the invention is equipped with the merchandise handling trucks 6 one in each of the multi-stage layers of shelf plates 10. Due to this, the merchandise storing and shipping operations can be carried out at the same time in the respective multi-stage layers, which makes it possible to store and ship a large quantity of merchandise efficiently.

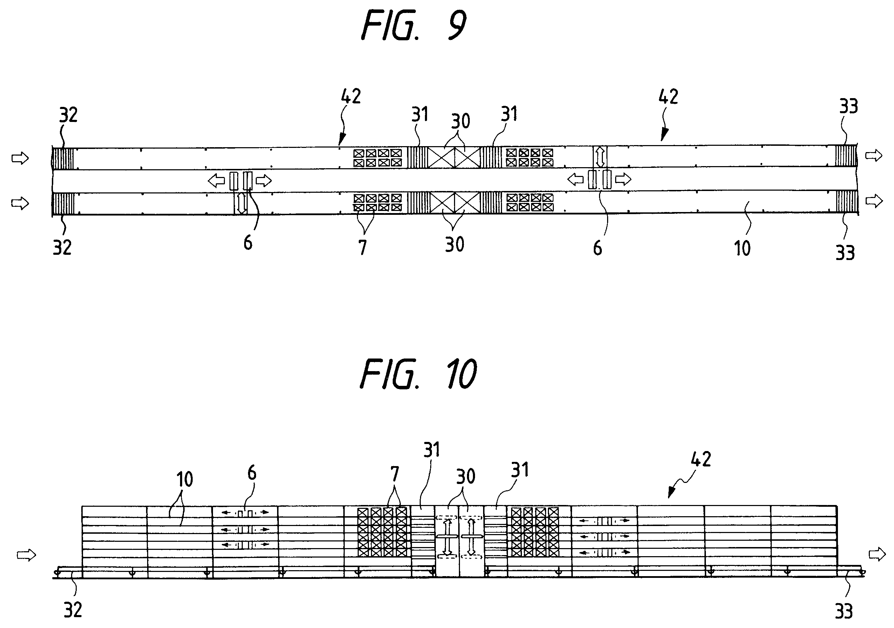

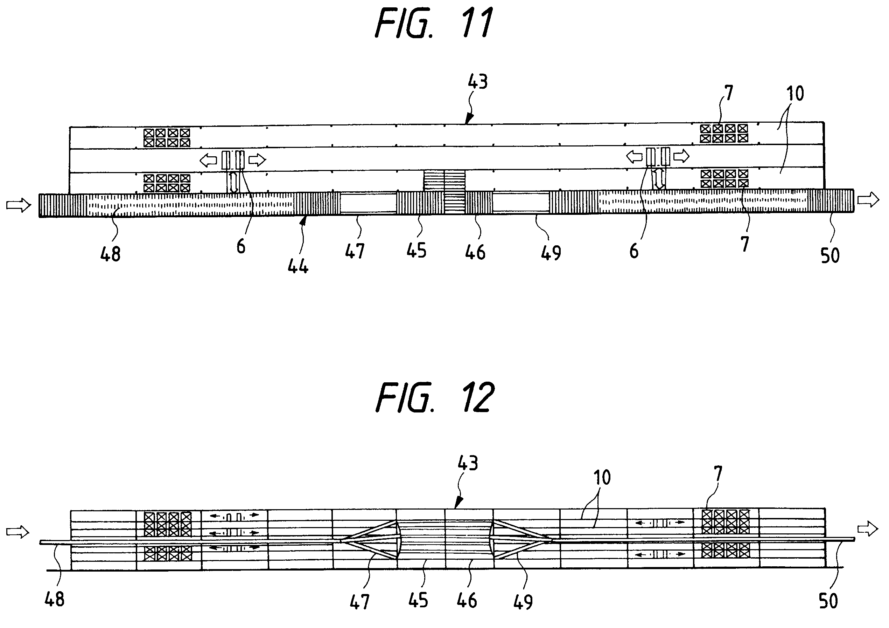

Now, Figs. 9 and 10 respectively show a second embodiment of merchandise handling equipment according to the invention. In particular, Fig. 9 is a plan view of the whole structure of the second embodiment, while Fig. 10 is a side view of the whole structure of the second embodiment.

In the merchandise handling equipment 42 according to the second embodiment, the lifters 30 for lifting up and falling down the merchandise 7 to each of the multi-stage layers of shelf plates are provided not in the two end portions of the shelf plate 10 but in the intermediate portions of the shelf plate 10. The remaining portions of the merchandise handling equipment 42 according to the second embodiment are quite the same as those of the merchandise handling equipment 5 shown in Figs. 1 to 4.

With use of the structure according to the second embodiment, there can be obtained a similar effect to the previously mentioned first embodiment. In addition, due to the fact that the lifters 30 are disposed in the intermediate portion of the shelf plate 10, the running distance of the merchandise handling truck 6 can be shortened, which can in turn reduce the time necessary for the merchandise storing and shipping operations.

Due to provision of the lifters 30 in the intermediate portion of the shelf plate 10, this lifter provision position provides the home position of the merchandise handling truck 6. This means that the running distance of the merchandise handling truck 6 from the lifter 30 to the end portion of the shelf plate 10 is about one half of the length of the shelf plate 10. Therefore, the running distance of the merchandise handling truck 6 necessary to handle or move the merchandise one time is shorter than the above embodiment shown in Fig. 3, so that the merchandise 7 storing and shipping performance of the present merchandise handling equipment can be enhanced.

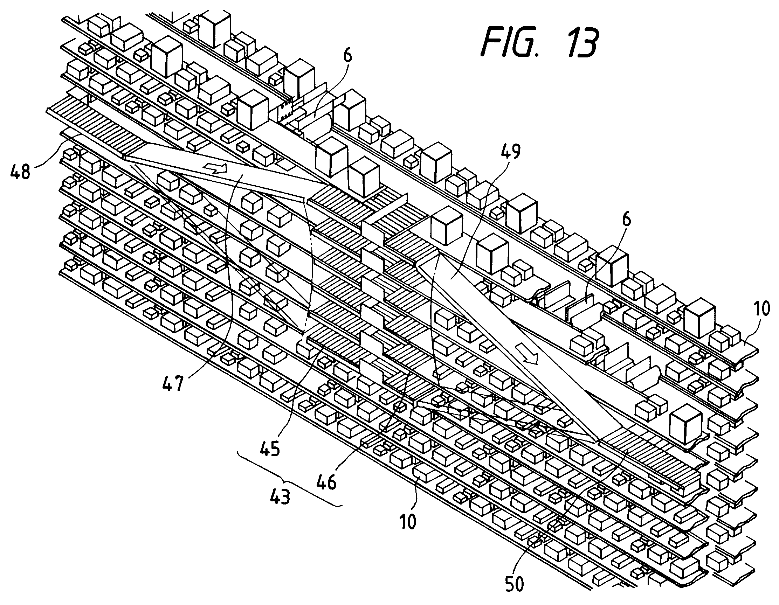

Now, Figs. 11 to 13 respectively show a third embodiment of merchandise handling equipment according to the invention. That is, Fig. 11 is a plan view of the whole structure of the third embodiment, Fig. 12 is a side view of the whole structure of the third embodiment, and Fig. 13 is a perspective view of the whole structure of the third embodiment.

The merchandise handling equipment 43 according to the third embodiment is equipped, by the side of the shelf plate 10, with a delivery line 44 for storing and shipping merchandise.

And, the delivery line 44 includes a merchandise storing and shipping device, which consists of a merchandise storing buffer conveyor 45 and a merchandise shipping buffer conveyor 46, one in each of the shelf plates 10 of the respective multi-stage layers, a carry-in conveyor 48 for delivering the merchandise 7 to the merchandise storing buffer conveyor 45 through a merchandise storing tilt conveyor 47, and a carry-out conveyor 50 for carrying out the merchandise 7 stored in the merchandise shipping buffer conveyor 46 through a merchandise shipping tilt conveyor 49. In the delivery line 44, the handling or movement of the merchandise 7 between the respective shelf plates 10 and the buffer conveyors 45, 46 is carried out by use of the merchandise handling truck 6.

The structure of the merchandise handling truck 6 per se is the same as that employed in the first embodiment.

Since the merchandise storing buffer conveyor 45 and shipping buffer conveyor 46 respectively forming the merchandise storing and shipping device are disposed in the central portion of the shelf plate 10 in the longitudinal direction thereof, this provision position provides the home position of the merchandise handling truck 6 for storing and shipping the merchandise.

As shown in Fig. 3, if the merchandise storing conveyor 32 and lifter 30 as well as the merchandise shipping conveyor 33 and lifter 30 are disposed in the two end portions of the shelf plate 10, respectively, then the running distance of the merchandise handling truck 6 is almost equal to the whole length of the shelf plate 10, that is, very long, when storing the merchandise 7 in the neighborhood of the shipping side end portion of the shelf plate 10, or when shipping the merchandise 7 stored in the neighborhood of the storing side end portion of the shelf plate 10. Although the mean running distance of the merchandise handling truck 6 is about one half of the whole running length, it is difficult to shorten the mean running distance and, therefore, it is impossible to enhance the merchandise storing and shipping performance of the merchandise handling equipment. Also, the merchandise storing and shipping performance is determined by the performance of the lifter 30. However, to enhance the performance of the lifter 30, it is necessary to increase the moving speed or the placement area of the lifter 30, which leads to the complicated structure of the merchandise handling equipment and an increase in the cost thereof.

On the other hand, according to the structure of the third embodiment of the invention, due to the fact that the merchandise storing buffer conveyor 45 and the merchandise shipping buffer conveyor 46 are disposed in the central portion of the shelf plate 10 in the longitudinal direction thereof and thus the home position of the merchandise handling truck 6 lies at the central portion of the shelf plate 10, when the merchandise handling truck 6 moves to the neighborhoods of the two end portions of the shelf plate 10, the running distance of the merchandise handling truck 6 is short so that the merchandise handling performance of the truck 6 can be enhanced. In this case, the mean running distance of the merchandise handling truck 6 is about a quarter of the whole running length, so that the running time of the material handling truck 6 can be shortened and thus the performance of the merchandise handling truck 6 can be enhanced.

Also, since the shelf plate 10 to be used can be selected by inclining the tilt conveyors 47, 49 without using a lifter, the present structure is simplified over a structure using a lifter and the merchandise storing and shipping performance thereof can be enhanced to a great extent.

Further, the merchandise 7 to be shipped more frequently is stored in central portion of the shelf plate or in the neighborhood of the central portion thereof, while the merchandise 7 to be shipped less frequently is stored in a portion remote from the central portion of the shelf plate. This can further enhance the merchandise storing and shipping performance of the merchandise handling equipment.

As described above, due to provision of the delivery line 44 on the opposite side of the shelf plate 10 to the running side of the merchandise handling truck 6, the merchandise storing and shipping time can be shortened.

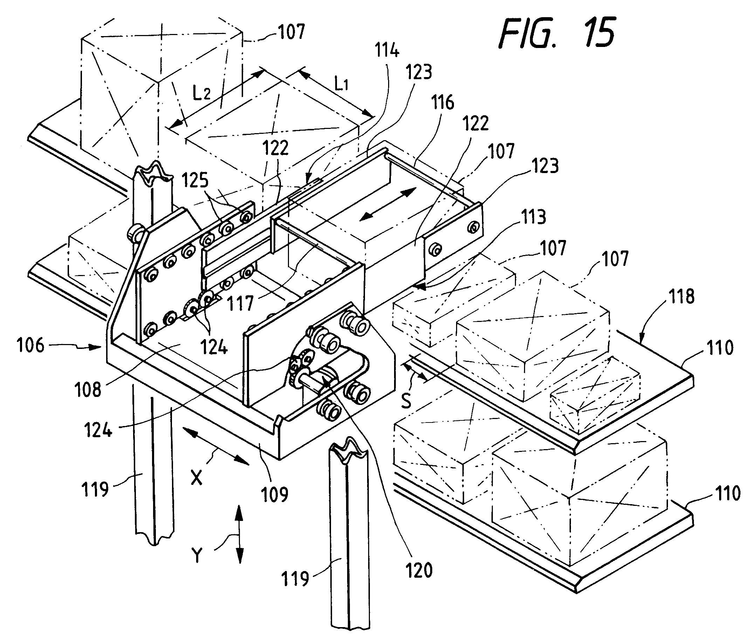

Now, Fig. 15 shows a fourth embodiment of a merchandise handling carriage portion or stacker crane according to the invention.

A merchandise handling carriage portion or stacker crane 106 according to the present embodiment comprises a carriage 109 including a pallet 108 for placing merchandise 107 thereon, a pair of left and right fork members 113, 114 which are respectively provided in the two side end portions of the pallet 108 and are advanceable and retreatable substantially horizontally from the carriage 109 to the shelf plate 110, and front end and rear end push rods 116, 117 the two end portions of which are fixed to and supported by the pair of left and right fork members 113, 114 in such a manner that, when the left and right fork members 113, 114 are situated by the side of the merchandise 107 on the pallet 108 or on the shelf plate 110, the push rods 116, 117 are situated on the front end side of the merchandise 107 or on the rear end side thereof.

In the present embodiment, the carriage 109 is supported by two masts 119 in such a manner that the carriage 109 can be moved at a proper time and by an arbitrary distance in the height direction of a shelf 118 (namely, in a direction of an arrow (Y) in Fig. 15) of a flat shelf structure including the shelf plates 110 in a plurality of stages (that is, the carriage 109 can be lifted and lowered). And, the masts 119 are arranged such that they are runnable or movable at a proper time and by an arbitrary distance in the extending direction of the shelf plate 110 (that is, in a direction of an arrow (X) in Fig. 15) by means of running means (not shown).

The pair of left and right fork members 113, 114 employ an expansion and contraction structure which is disclosed in Japanese Patent Publication No. 4-112129 of Heisei. That is, the pair of left and right form members 113, 14 each includes a drive motor (namely, a fork back-and-forth drive motor) disposed on the carriage 109, a plurality of pinion gears 124 which are respectively disposed on the pallet 108 and can be rotationally driven by the drive motor 120, a plurality of guide rollers 125 which are respectively supported on the pallet 108 in a freely rotatable manner, a second fork 122 which can be advanced and retreated on the pallet 108 toward the shelf 118 side by means of the pinion gears 124 and guide rollers 125, and a top fork 123 advanceable and retreatable on the second fork 122 in linking with the advancing and retreating operations of the second fork 122. In this structure, when the second fork 122 is extended to the maximum from the pallet 108, the top fork 123 is extended to the maximum from the second fork 22. On the other hand, when the second fork 122 returns back to its initial position on the pallet 108, the top fork 123 is stored within the second fork 122. That is, the present structure is a two-stage expansion and contraction structure.

The second forks 122 of the pair of left and right fork members 113, 114 are supported on the pallet 108 in such a manner that they are spaced from each other by a distance which is larger than the right and left direction length dimension L1 of the merchandise 107 to be moved. And, the front end and rear end push rods 116, 117 are spaced from each other by a distance larger than the back-and-forth direction length dimension L2 of the merchandise 107 to be moved, while the two end portions of the front end and rear end push rods 116, 117 are fixed to the top forks 123 of the pair of left and right fork members 113, 114, respectively.

That is, the pair of left and right top forks 123 and the front end and rear end push rods 116, 117 are arranged so as to form a frame which encloses the periphery of the merchandise 107 to be moved.

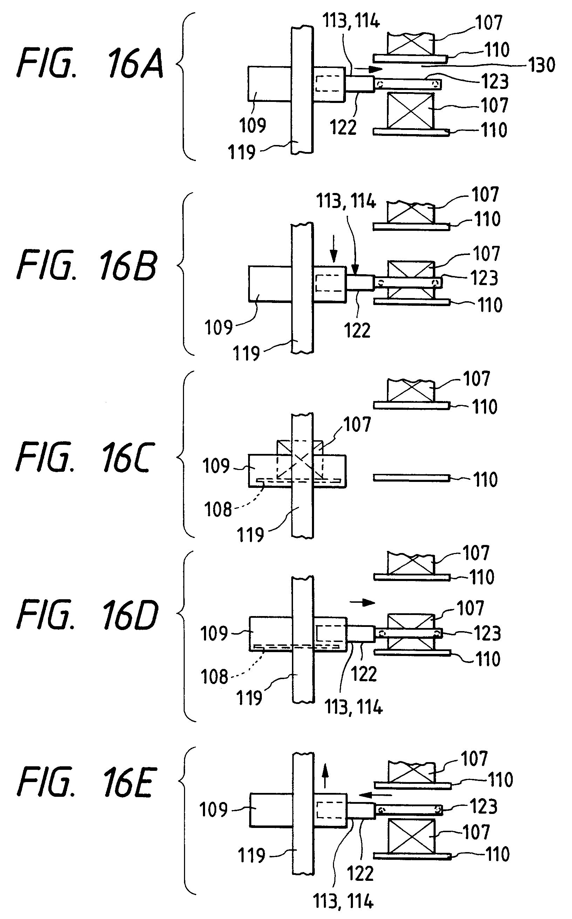

In the above structured stacker crane 106, the movement of the merchandise 107 is carried out in such a manner as shown in Figs. 16A to 16E.

That is, at first, when the merchandise 107 on the shelf plate 110 is to be moved onto the pallet 108 of the stacker crane 106, as shown in Fig. 16A, the carriage 109 is raised and lowered so that the height positions of the pair of left and right fork members 113, 114 are situated in a space 130 formed above the merchandise 107 to be moved, and the pair of left and right fork members 113, 114 are extended to thereby allow the top forks 123 to project into the space 130 above the merchandise 107 to be moved.

After then, as shown in Fig. 16B, the carriage 109 is lowered a proper amount so that the merchandise 107 to be moved can be stored within the frame formed by the pair of left and right top forks 123 and the front end and rear end push rods 116, 117.

Next, as shown in Fig. 16C, the pair of left and right fork members 113, 114 are contracted so that the merchandise 107 to be moved can be slided on the shelf plate 110 and can be pushed onto the pallet 108 by the front end push rod 116.

On the other hand, when the merchandise 107 on the pallet 108 is to be moved onto the shelf plate 110, from the state shown in Fig. 16D, the pair of left and right fork members 113, 114 are extended so that the merchandise 107 on the pallet 108 can be pushed onto the shelf plate 110 by the rear end push rod 117, as shown in Fig. 16D.

Next, as shown in Fig. 16E, the carriage 109 is raised in such a manner that the pair of left and right fork members 113, 114 can be moved into the space 130 above the merchandise 107 to be moved, and, in this state, the pair of left and right fork members 113, 114 are contracted, thereby being able to complete the movement of the merchandise 107 onto the shelf plate 110.

As described above, in the stacker crane 106 according to the present embodiment, the movement of the merchandise 107 from one of the pallet 108 and shelf plate 110 to the other is carried out by advancing and retreating (that is, extending and contracting) the pair of left and right fork members 113, 114 and by allowing the merchandise 107 to slide on the pallet 108 or on the shelf plate 110 by means of the push rods 116, 117 which are pressed against the front end and rear end of the merchandise 107. Thanks to this, when compared with the structure disclosed in Japanese Patent Publication No. 7-25415 of Heisei in which the merchandise is held by use of the sucking disc, the movement of the merchandise can be carried out without any trouble even when the merchandise is stored in a case with holes.

Also, since the push rods 116, 117 for pushing out the merchandise 107 are fixed to and supported by the top forks 123 of the fork members 113, 114, when compared with the structure disclosed in Japanese Patent Publication No. 6-345214 of Heisei in which the arms for pushing out the merchandise are arranged such that they are rotatable, there is eliminated the need to provide a mechanism and a drive source respectively used to drive the push rods on the fork members 113, 114. Due to this, the fork members 113, 114 to be inserted into the clearances between the merchandise can be designed to be fine and compact so that the fork members 113, 114 require a small space, and the clearances between the merchandise 107, 107 on the shelf plate 110 can be minimized. That is, in the structure according to the present embodiment of the invention, it is possible to enhance the storage efficiency of the merchandise 107 on the shelf plate 110.

Further, according to the structure of the invention, since the fork members 113, 114 are arranged in such a 2-stage expansion and contraction structure as disclosed in Japanese Patent Publication No. 4-112129 of Heisei, even when compared with the structure disclosed in Japanese Patent Publication No. 7-25415 of Heisei in which the sucking disc is operated or moved, an increase in the dimension of the equipment in the moving direction of the merchandise 107 can be reduced and the equipment can be thereby made compact. The compact structure of the equipment in turn makes it possible to narrow the clearance between the shelf lines.

As described above, according to the structure of the present embodiment, thanks to the reduced clearance between the merchandise 107 on the shelf plate 110 and the narrowed clearance between the shelf lines, it can be expected that the storage efficiency of the merchandise in a warehouse or the like can be improved to a great extent.

Also, since the front end and rear end push rods 116, 117 and the top forks 123 of the pair of left and right fork members 113, 114 supporting these push rods cooperate together in forming a frame for enclosing the periphery of the merchandise 107 to be moved, the loads to be applied to the fork members 113, 114 when the merchandise 107 is pushed out can be dispersed to the pair of left and right fork members 113, 114, that is, the loads can be reduced down to a half. For this reason, the strength to be secured for a fork member can be decreased and thus the diameters of the fork members 113, 114 can be reduced further. This makes it possible to reduce further the clearance between the merchandise 107, 107 on the shelf plate 110.

For reference, in the above-mentioned embodiment, as the push rods, there are provided a pair of front and rear push rods 116, 117. However, this is not limitative but, alternatively, only one of them can be employed.

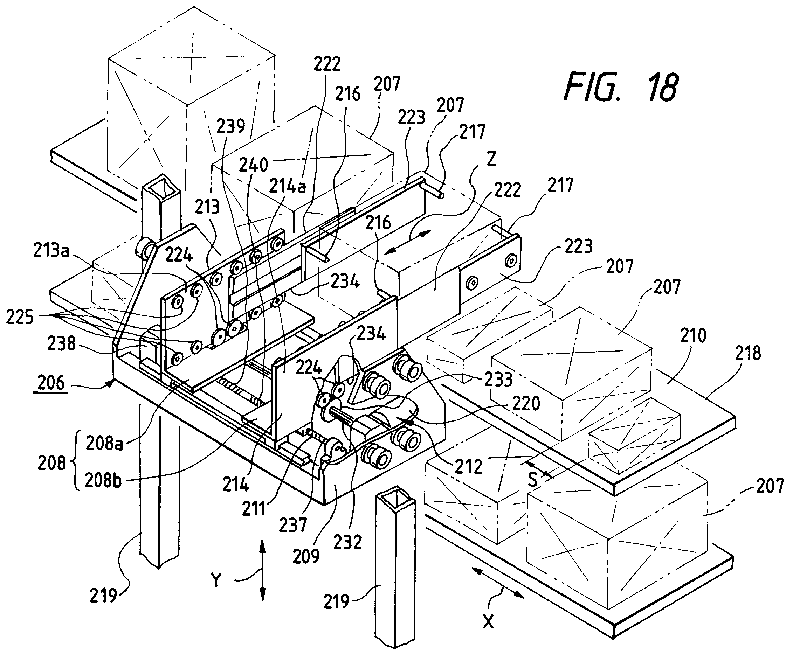

Further, in the above embodiment, the front end and rear end push rods 116, 117 are respectively supported between the top forks 123 of the pair of left and right fork members 113, 114. However, as shown in Fig. 17A, it is further preferable that the intermediate push rod 115 may be provided between the front end and rear end push rods 116 and 117. Of course, the number of the intermediate push rod 115 is not limited to one, but two or more intermediate push rods 115 may also be provided.

According to the present structure, a plurality of merchandise 107, 107 respectively stored on the shelf plate 110 in the depth direction thereof can be drawn onto the pallet 108 at the same time, thereby being able to enhance the merchandise moving efficiency. Also, when moving the merchandise on the pallet 108 onto the shelf plate 110, a plurality of merchandise 107 can be moved at the same time, thereby being also able to improve the merchandise moving efficiency. Further, since the two pieces of merchandise 107 are separated by the intermediate push rod 115 when they are moved, there are formed clearances between the plurality of merchandise 107 that have been moved to the shelf plate 110 in the depth direction of the shelf plate 110. Therefore, when the merchandise 107 is taken out next from the shelf plate 110, the push rod 116 can be inserted easily between the plurality of merchandise 107 stored in the depth direction of the shelf plate 110, so that the merchandise 107 can be taken out easily even when it is taken out individually one by one.

Alternatively, as shown in Fig. 17B, the fork member 113 may be provided only in one side portion of the pallet 108, and the front end and rear end push rods 116, 117 may be supported in a cantilever manner by the top fork 123 of the fork member 113. In this structure as well, due to provision of the intermediate push rod 115, there can be obtained a similar effect to the above-mentioned structure.

Fig. 18 shows a fifth embodiment of a merchandise handling carriage portion or stacker crane according to the invention.

The stacker crane 206 according to the fifth embodiment comprises a carriage 209 including a pallet 208 for placing merchandise 207 thereon, a pair of left and right fork members 213, 214 respectively provided in the two side end portions of the pallet 208, a fork width adjusting mechanism 211 for adjusting a mutually spaced distance between the pair of left and right fork members 213, 214, a fork advancing and retreating mechanism 212 for advancing and retreating the pair of left and right fork members 213, 214 almost horizontally from the carriage 209 to a shelf plate 210, and front end and rear end push rods 216, 217 which are respectively fixed and supported at the ends thereof to the pair of left and right fork members 213, 214 in such a manner that they are situated in front of or in the rear of the merchandise 207 when the merchandise 207 is situated between the pair of left and right fork members 213 and 214, and also which cooperate with the pair of left and right fork members 213, 214 in forming a frame for enclosing the periphery of the merchandise 207.

Here, in the fifth embodiment, the pallet 208 is made up of two flat plates 208a and 208b which are divided into the left and right plates, while the two flat plates 208a and 208b are respectively formed integral with base forks 213a and 213b which are respectively the composing elements of the fork members 213 and 214.

Also, the carriage 209 is supported by masts 219 in such a manner that they can be moved (that is, they can be raised up and fallen down) at a proper time and by an arbitrary distance in the height direction (in a direction of an arrow (Y) shown in Fig. 18) of a shelf 218 of a flat shelf type including a plurality of the shelf plates 210 which are arranged in a plurality of stages. And, the masts 219 are structured such that they are runnable at a proper time and by an arbitrary distance in the extending direction (in a direction of an arrow (X) shown in Fig. 18) of the shelf plate 210 by running means (not shown).

The pair of left and right fork members 213, 214 respectively comprise the above-mentioned base forks 213a, 214a formed integral with the respective flat plates 208a, 208b of the pallet 208, second forks 222 respectively supported in such a manner that they can be advanced and retreated on the base forks 213a, 214a in the direction of the shelf 218 through guide rollers 225 respectively supported rotatably on the base forks 213a, 214a, and top forks 223 respectively advanceable and retreatable on the second forks 222 through guide rollers 221 in linking with the advancing and retreating operations of the second forks 222. And, the pair of left and right fork members 213, 214 are structured such that they can be expanded and contracted as a whole.

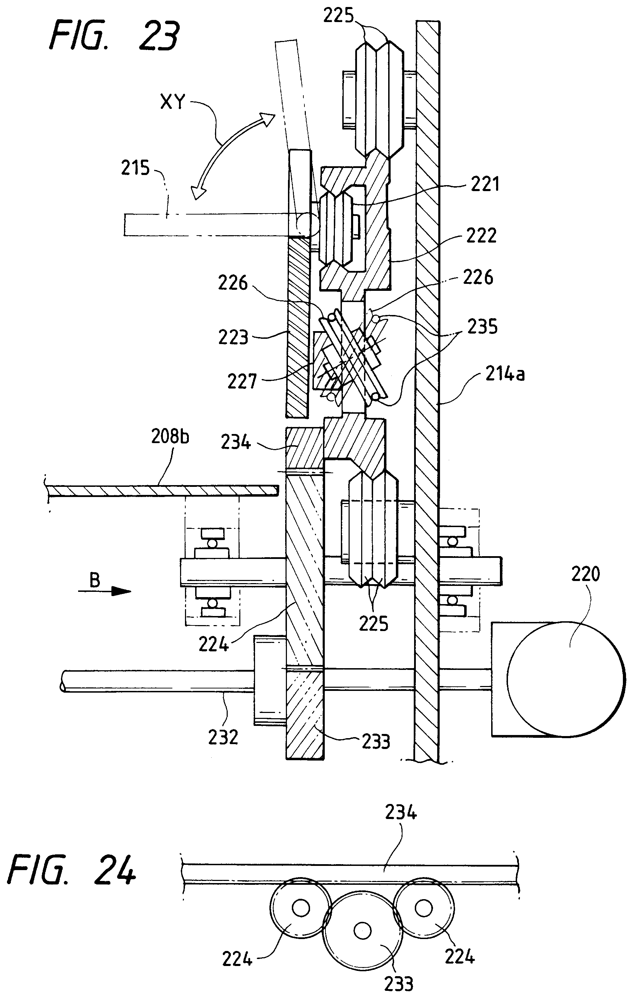

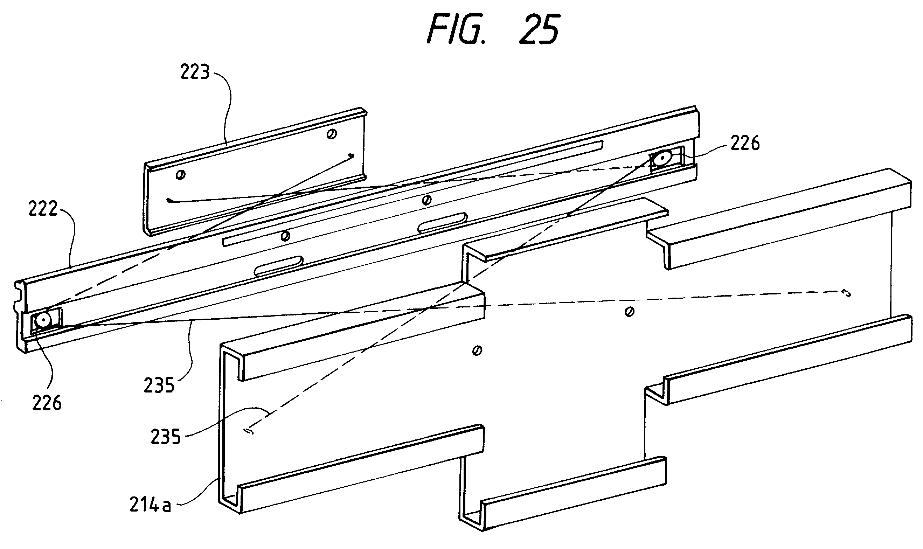

And, the fork advancing and retreating mechanism 212 is used to advance and retreat the top forks 223 in the direction of the shelf 218 by expanding and contracting the fork members 213, 214. As shown in Figs. 23 and 24 as well, the fork advancing and retreating mechanism 212 comprises a drive motor 220 provided on the carriage 209, a spline shaft 232 which can be rotationally driven by the drive motor 220, pinion gears 224 which are respectively supported rotatably on the base forks 213a, 214a and also which are meshable with a drive gear 233 on the spline gear 232 and are thus rotatable in linking with the spline shaft 232, rack members 234 formed integral with the lower end portions of the second forks 222 and meshable with the pinion gears 224, and a wire connecting mechanism 235 (see Figs. 23 and 25) for connecting the second forks 222 with the top forks 223 in such a manner that, when the second forks 222 advance and retreat with respect to the base forks 213a, 214a due to the rotational movements of the pinion gears 224, the top forks 223 can be made to advance and retreat on the second forks 222 in linking with the advancing and retreating operations of the second forks 222.

The wire connecting mechanism 235 for connecting the top forks 223 with the advancing and retreating operations of the second forks 222 employs an expansion and contraction structure which is disclosed in Japanese Patent Publication No. 4-112129 of Heisei and, in addition, the wire connecting mechanism 235 is made compact in the height direction thereof. In particular, the wire connecting mechanism 235 provides a 2-stage expansion and contraction structure in which, when the second forks 222 are extended to the maximum from the pallet 208, the top forks 223 are extended to the maximum from the second forks 222 and, on the other hand, when the second forks 222 returns to their initial positions on the pallet 208, the top forks 223 are stored within the second forks 223 respectively.

By means of the above-mentioned fork advancing and retreating mechanism 212, the top forks 223 are allowed to advance and retreat from the pallet 208 to the shelf plate 210 substantially horizontally in the depth direction (Z) of the shelf plate 210.

The fork width adjusting mechanism 211 comprises a ball screw shaft 237 and a drive motor 238 for rotationally driving the ball screw shaft 237. The ball screw shaft 237 is a shaft which includes a left hand screw 239 and a right hand screw 240 respectively formed in the two ends thereof. The left hand and right hand screws 239, 240 are respectively in threaded engagement with blocks formed integral with the flat plates 208a, 208b and are used to adjust a mutually spaced distance between the base forks 213a, 214a formed integral with the flat plates 208a, 208b in accordance with the rotational direction of the ball screw shaft 237.

In the fifth embodiment, the front end and rear end push rods 216, 217 are structured such that the respective base side ends thereof are fixed to the top forks 223 and the push rods 216, 217 respectively project inwardly of the frame from the left and right top forks 223.

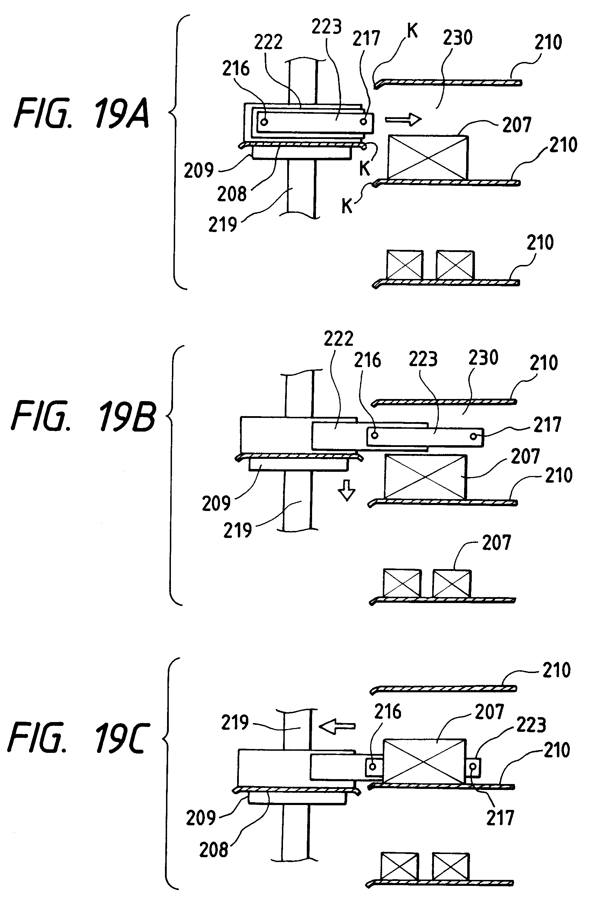

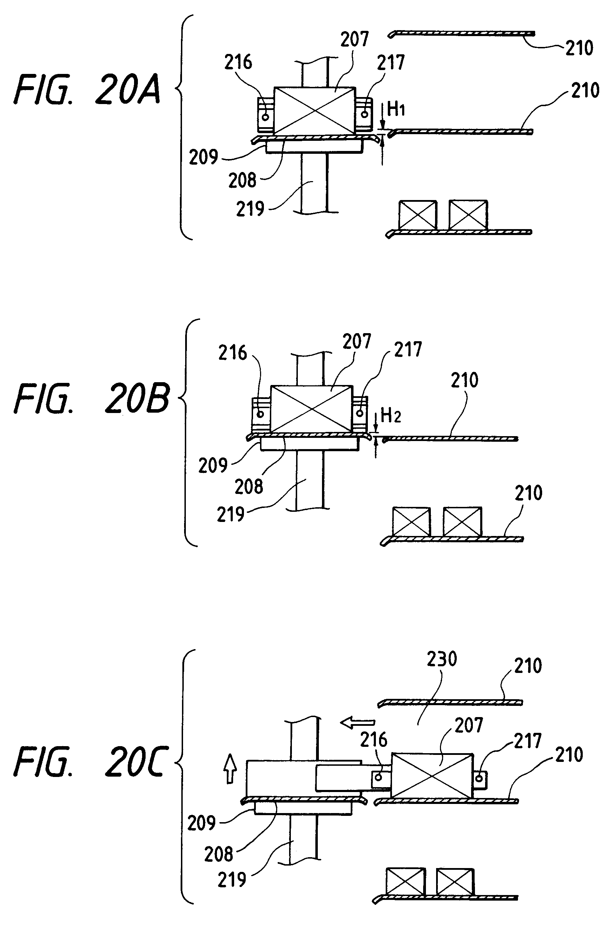

In the stacker crane 206 structured in the above-mentioned manner, the moving operation of the merchandise 207 is carried out in such a manner as shown in Figs. 19A to 19C and 20A to 20C.

That is, when the merchandise 207 on the shelf plate 210 is to be moved onto the pallet 208 of the stacker crane 206, at first, as shown in Fig. 19A, the carriage 209 is raised up and fallen down to adjust the height positions of the pair of left and right fork members 213, 214 so that the height positions of the front end and rear end push rods 216, 217 provided on the top forks 223 can be set in a space 230 existing above the merchandise 207 to be moved, and also the spaced distance between the pair of left and right fork members 213, 214 is adjusted by the fork width adjusting mechanism 211 to such an extent that the spaced distance between the pair of left and right fork members 213, 214 is slightly greater than the width dimension of the merchandise 207 to be moved.

Next, as shown in Fig. 19B, the pair of left and right fork members 213, 214 are extended by the fork advancing and retreating mechanism 212 to thereby allow the top forks 223 to project into the space 230 above the merchandise 207 to be moved.

Then, as shown in Fig. 19C, the carriage 209 is fallen down by a proper amount so that the merchandise 207 to be moved can be stored within the frame that is formed by the pair of left and right top forks 223 and the front end and rear end push rods 216, 217.

After then, as shown in Fig. 20A, the pair of left and right fork members 213, 214 are contracted and thus the merchandise 207 to be moved is slided on the shelf plate 210 and is pushed onto the pallet 208 by the rear end push rod 217.

For reference, as shown in the above-mentioned Fig. 19A, the mutually opposing end edges of the pallet 208 and shelf plate 210 are respectively bent with an inclination K in order to prevent the end portions of the merchandise 207 to be moved from being caught by such end edges. Also, as shown in Fig. 20A, when the merchandise 207 is moved from the shelf plate 210 to the pallet 208, the height position of the surface of the pallet 208 is set lower by a slight amount H1 than the height position of the surface of the shelf plate 210 in order that the merchandise 207 to be moved can made to slide to the pallet 208 side.

On the other hand, when the merchandise 207 on the pallet 208 is to be moved onto the shelf plate 210, as shown in Fig. 20B, the carriage 209 is raised and lowered in such a manner that the height position of the surface of the pallet 208 is set higher by a slight amount H2 than the height position of the surface of the shelf plate 210 and, next, as shown in Fig. 20C, the pair of left and right fork members 213, 214 are extended to thereby allow the front end push rod 216 to push out the merchandise 207 on the pallet 208 onto the shelf plate 210.

After then, the carriage 209 is raised in such a manner that the front end and rear end push rods 216, 217 on the pair of left and right fork members 213, 214 are moved to the space 230 existing above the merchandise 207 to be moved and, in this state, the pair of left and right fork members 213, 214 are contracted. This completes the operation to move the merchandise 207 onto the shelf plate 210.

As has been described above, in the stacker crane 206 according to the first embodiment, the movement of the merchandise 207 from one of the pallet 208 and shelf plate 210 to the other is carried out by advancing and retreating (extending and contracting) the pair of left and right fork members 213, 214 and by allowing the merchandise 207 to slide on the pallet 208 or on the shelf plate 210 by means of the push rods 216, 217 pressed against the front end or rear end of the merchandise 207. Due to this, when compared with the structure disclosed in Japanese Patent Publication No. 7-25415 of Heisei in which the merchandise is held by use of the sucking disc, the movement of the merchandise can be carried out without any trouble even when the merchandise is stored in a case with holes.

Also, since the push rods 216, 217 for pushing out the merchandise 207 are structured such that they are fixed to and supported by the top forks 223 of the fork members 213, 14, when compared with the structure disclosed in Japanese Patent Publication No. 6-345214 of Heisei in which the arms for pushing out the merchandise are formed rotatable, there is eliminated the need to provide on the fork members 213, 214 a mechanism and a drive source respectively used to drive the push rods 216, 217. Due to this, the fork members 213, 214 to be inserted into the clearance between the merchandise 207 can be designed fine such that it requires a small space and also the clearance S (see Fig. 18) between the merchandise 207 on the shelf plate 210 can be reduced, so that the storage efficiency of the merchandise 207 on the shelf plate 210 can be enhanced.

Also, since, in the fork members 213, 214, there is employed such a 2-stage expansion and contraction structure as disclosed in Japanese Patent Publication No. 4-112129 of Heisei, even when compared with the structure disclosed in Japanese Patent Publication No. 7-25415 of Heisei in which the sucking disc is operated or moved to hold the merchandise, an increase in the size of the stacker crane in the moving direction of the merchandise 207 can be reduced to thereby make the stacker crane compact. The compact stacker crane also makes it possible to narrow the clearance between the shelf lines.

Further, because the front end and rear end push rods 216, 217 and the pair of left and right top forks 223 respectively supporting the push rods cooperate together in forming a frame for enclosing the periphery of the merchandise 207 to be moved, the loads to be applied to the fork members 213, 214 when the merchandise 207 is pushed out can be dispersed to the pair of left and right fork members 213 and thus the load to be applied to each of them can be reduced down to one half, that is, the strength to be secured for one form member can be lowered, so that the diameters of the fork members 213, 214 can be further reduced. This makes it possible to further reduce the clearance S between the merchandise 207 on the shelf plate 210.

Moreover, since the spaced distance between the pair of left and right fork members 213, 214 can be adjusted, the two or more pieces of the merchandise 207 to be placed on the shelf plate 210 can be stored in such a manner that the clearance between them can be narrowed down to the clearance S which permits the insertion of the fork members 213, 214. This eliminates the wasteful use of the space that, even when the merchandise 207 to be stored on the shelf plate 210 is of a small size, a storage space equivalent to that of the large-size merchandise 207 is similarly allotted to the small-size merchandise 207. This makes it possible to further enhance the storage efficiency of the merchandise in a warehouse or the like.

In other words, due to the reduced clearance between the two or more pieces of the merchandise 207 on the shelf plate 210 and the narrowed clearance between the shelf lines, it can be expected that the storage efficiency of the merchandise in a warehouse or the like can be enhanced to a great extent.

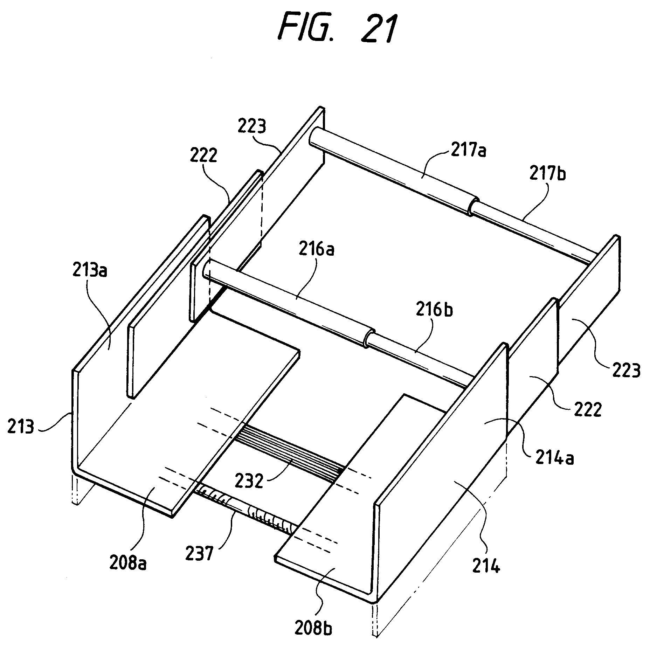

In the above-mentioned fifth embodiment, the front end and rear end push rods 216, 217 provided in their respective left and right top forks 223 are both structured in a cantilever manner and the push rods opposed to each other in the width direction of the merchandise 207 to be moved are spaced apart from each other. However, according to the invention, alternatively, as shown in Fig. 21, there can be employed a structure in which front end push rods 216a, 216b and rear front end push rods 217a, 217b respectively opposed to each other in the width direction of the merchandise 207 to be moved are formed as sliding pairs and are thus fitted with each other to be thereby connected with each other in the form of a single rod respectively. That is, there can be employed a frame structure in which the spaced distance between the fork members 213, 214 can be adjusted.

In this structure, since the push rods opposed to each other in the width direction of the merchandise are connected with each other, the strength of the frame is enhanced. This makes it possible to stabilize the operation to push out the merchandise 207. And, by reducing the diameters of the rod-shaped members used as the push rods, the weight of the stacker crane can be reduced.

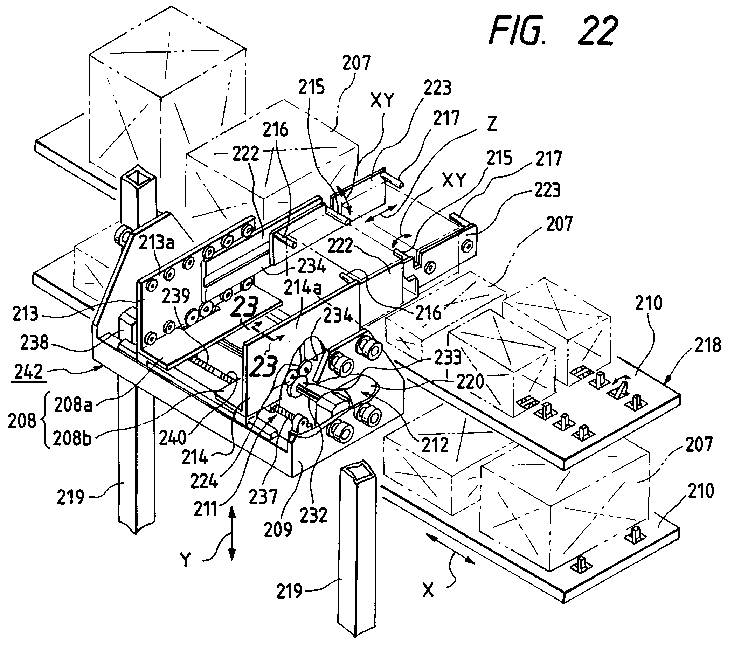

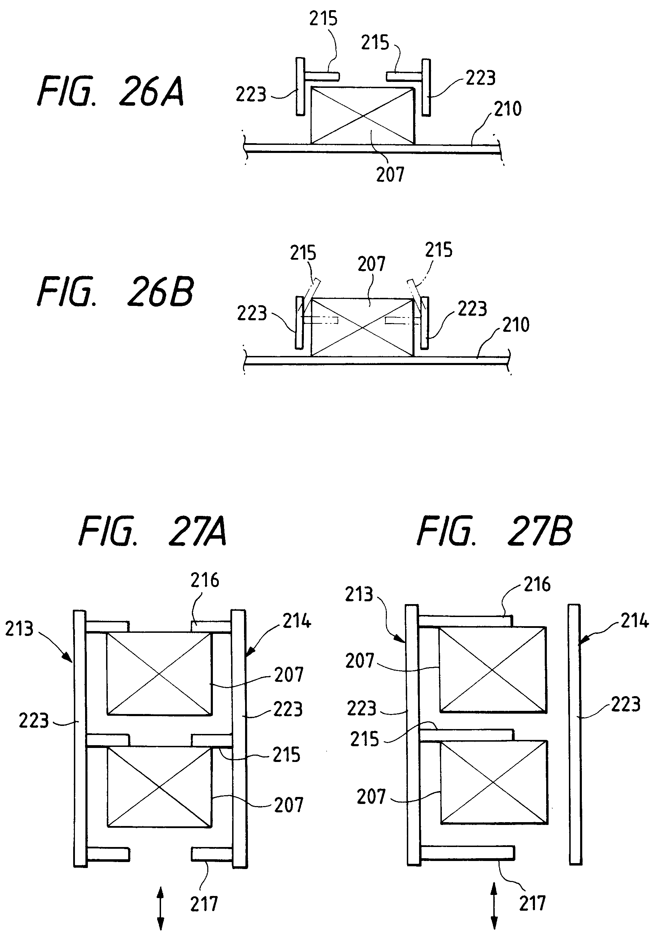

Now, Figs. 22 to 26B show a sixth embodiment of a stacker crane according to the invention. In particular, Fig. 22 is a perspective view of the whole structure of the sixth embodiment, Fig. 23 is a section view taken along the line 23-23 shown in Fig. 22, Fig. 24 is an arrow view when viewed from a direction of an arrow B shown in Fig. 23, Fig. 25 is a perspective view of a wire mechanism employed in the sixth embodiment, showing how the wires are extended, and Fig. 26A and 26B are explanatory views of the operation of the sixth embodiment shown in Fig. 22.

In the stacker crane 242 according to the sixth embodiment, intermediate push rods 215 are additionally provided one in each of the left and right top forks 223 which are the composing elements of the fork members 213, 214. Except for the additional provision of the intermediate push rods 215, the stacker crane 242 is similar in structure to the stacker crane 206 shown in Fig. 18.

The upper and lower edges of the second fork 222 are formed as projecting portions each having a V-shaped section, the base fork 214a includes in the upper and lower portions thereof guide rollers 225 each having a V-section groove engageable with the V-shaped projecting portion of the second fork 222, and the guide rollers 225 hold the second fork 222 between them from top and bottom in such a manner that the second fork 222 can run along the guide rollers 225. The top fork 223 also includes guide rollers 221 each having a V-section groove, the second fork 222 includes a cutaway portion for a passage through which the guide rollers 221 of the top fork 223 run, the upper and lower edges of the inner surfaces of the cutaway portion are formed as projecting portions each having a V-shaped section, and the V-shaped projecting portions hold the guide rollers 221 of the top fork 223 between them from top and bottom in such a manner that the guide rollers 221 can run. In the second fork 222, there is provided a stopper 227 which prevents the top fork 223 from inclining or falling down.

At the two ends of the second fork 222 in the running direction thereof, there are respectively arranged pulleys having rotational surfaces which are inclined with respect to a vertical surface in mutually different directions, and wires 235 extended over the pulleys 226 are fixed to same side of the top fork 223 and base fork 214a, while, if the second fork 222 is extended and contracted, then the top fork 223 can also be extended and contracted.

This structure is also employed in the first embodiment shown in Fig. 18. Since the second fork 222 is supported by the guide rollers 225 of the base fork 214a and the guide rollers 221 of the top fork 223 are supported within the cutaway portion of the second fork 222, the thickness of the second fork 222 can be reduced. Also, because the pulleys 226 over which the wires 235 are extended are arranged obliquely so that they can be stored within the thickness of the second fork 222, the thickness of the whole fork can be reduced.

The intermediate push rods 215 are provided on and projected from the top forks 223 so that they subdivide the distance between the front end and rear end push rods 216, 217 respectively provided in the left and right top forks. The intermediate push rods 15 subdivide a frame, which is formed by the front end and rear end push rods 216, 217 and the pair of left and right top forks 223 so as to enclose the periphery of the merchandise 207, into two in the depth direction (Z) of the shelf plate 210.

Also, the intermediate push rods 215, as shown in Fig. 26A, are situated above the merchandise 207 by means of the expansion operation of the fork members 213, 214 by the fork width adjusting mechanism 211 and, after then, when the carriage 209 is lowered, as shown in Fig. 26B, the intermediate push rods 215 are supported by the top forks 223 swingably in the vertical direction (XY) so that they can retreat upwardly when they are contacted with the upper end of the merchandise 207.

The reason why the above-mentioned intermediate push rods 215 are provided is that, when the merchandise 207 stored on the shelf plate 210 has a small dimension in the depth direction of the shelf plate 210 (that is, the dimension of the merchandise 207 in the back-and-forth direction thereof is small), the merchandise storage efficiency on the shelf plate 210 can be improved as well as the merchandise moving efficiency can be enhanced.

That is, when the merchandise 207 of a small dimension that can be stored within each of the sub-frames subdivided by the intermediate push rods 215 is placed on the pallet 208 or on the shelf plate 208, as shown in Fig. 27A, two or more pieces of the merchandise 207 are arranged in the depth direction of the pallet 208 or shelf plate 210 with a clearance corresponding to a mutual clearance between the two sub-frames that are subdivided by the intermediate push rods 215.

And, when two pieces of the merchandise 207 arranged in the depth direction of the shelf plate 210 are to be moved, as shown in Fig. 27A, while two pieces of the merchandise 207 are respectively stored within the two sub-frames subdivided by the intermediate push rods 215, if the top forks 223 are allowed to advance and retreat substantially horizontally, then the two pieces of the merchandise 207 placed in the depth direction of the shelf plate 210 can be made to slide together at the same time on the pallet 208 or on the shelf plate 210.

With use of this moving method, the two pieces of the merchandise 207 placed on the shelf plate 210 in the depth direction thereof can be carried onto the pallet 208 at the same time, thereby being able to enhance the merchandise moving efficiency. And, also when the merchandise put on the pallet 208 is to be moved onto the shelf plate 210, the two pieces of the merchandise 207 can be moved together at the same time, which in turn can improve the merchandise moving efficiency. Still further, since the two pieces of the merchandise 207 are moved while they are separated by the intermediate push rods 215, there is formed a clearance between the two pieces of the merchandise 207 after they are moved onto the shelf plate 210 in the depth direction of the shelf plate 210. Due to this, when taking out the merchandise 207 from the shelf plate 210 next, the rear end push rods 217 can be inserted between the two pieces of the merchandise 207 in the depth direction of the shelf plate 210 and thus the merchandise 207 can be taken out easily even one by one.

Also, alternatively, as shown in Fig. 27B, the front end and rear end push rods 216, 217 and intermediate push rod 215 may be provided only in one of the right and left top forks 223. In this structure as well, there can be obtained a similar effect to the above-mentioned structure.

Further, the number of the intermediate push rod 215 provided between the front end and rear end push rods 216, 217 is not limited to one but, for example, as shown in Fig. 228, it is also possible that the number of the intermediate push rod 215 is increased to thereby increase further the number of pieces of the merchandise that can be moved together at the same time, so that the merchandise moving efficiency as well as the merchandise storage efficiency can be further enhanced.

In addition, similarly to the intermediate push rod 215, the front end and rear end push rods 216, 217 may also be structured in such a manner that they can be swung in the vertical direction.

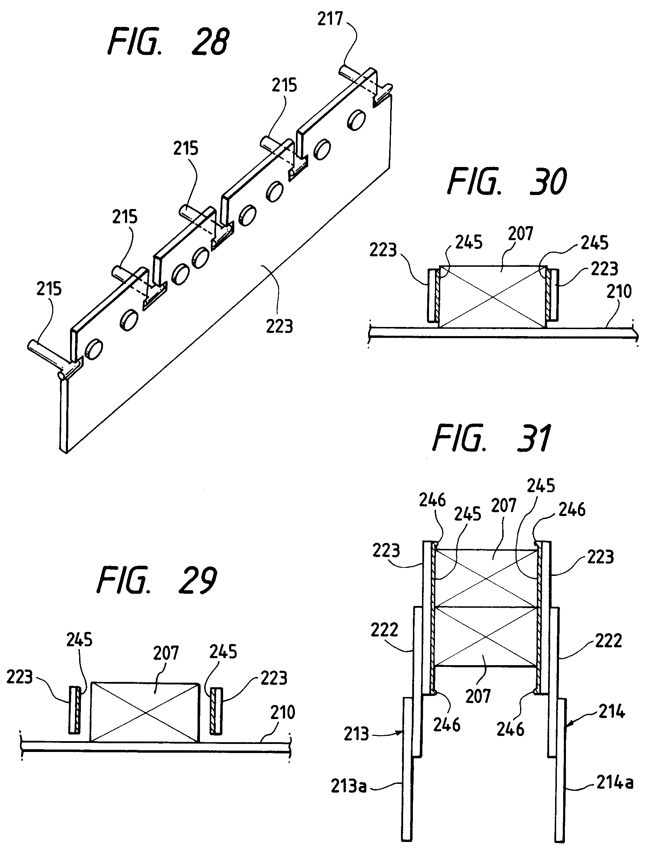

Now, Fig. 29 is a front view of the main portions of a seventh embodiment of a stacker crane according to the invention. In the stacker crane according to the seventh embodiment, instead of the push rods employed in the previous embodiments, two plate-shaped friction force increasing members 245 each formed of rubber or the like are provided on the respective inner surfaces of the top forks 223 of the fork members 213, 214 which are structured such that the mutually spaced distance between them in the width direction thereof can be adjusted.

In the stacker crane having this structure, as shown in Figs. 30 and 31, the merchandise 207 is handled or moved in such a manner that the merchandise 207 is held by and between the left and right top forks 223 and, in this state, the fork members 213, 214 are extended and contracted to thereby allow the merchandise 207 to slide on the pallet 208 or on the shelf plate 210. As shown in Fig. 31, if projections 246 are respectively provided in the front and rear ends of the friction force increasing members 245, then these projections 246 are allowed to have such functions as the front end and rear end push rods 216, 217, so that the reliability of the structure can be enhanced.

The present structure eliminates the need to secure the space above the merchandise 207 for passage of the push rods, thereby being able to reduce the clearance between the shelf plates 210 by an amount corresponding to the eliminated space.

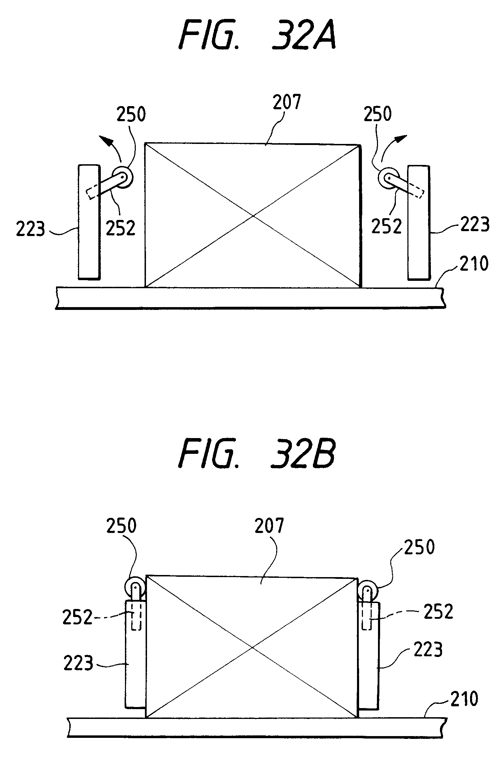

Alternatively, as shown in Figs. 32A and 32B, there may be provided an intermediate push rod 252 which can be swung in the vertical direction. The intermediate push rod 252, as shown in Fig. 32A, is energized at a waiting position by a spring or the like, while, at the waiting position, the intermediate push rod 252 projects at an angle not perpendicular to the top fork 223 and is held so as to face in the oblique direction in such a manner that the intermediate push rod 252 can be swung within a vertical surface. A roller 250 is provided at the leading end of each of the intermediate push rods 252. If the distance between the top forks 223 is narrowed, then the rollers 250 are contacted with the merchandise 207 and, in response to this, as shown in Fig. 32B, the intermediate push rods 252 are caused to swing and retreat upwardly. Therefore, even when the merchandise 207 has such a large dimension in the back-and-forth direction thereof as intersects the intermediate push rods 252, since the intermediate push rods 252 are pressed and retreated by the merchandise 207 due to the horizontal movements of the top forks 223, there is no possibility that the intermediate push rods 252 can interfere with the movement of the merchandise 207 at all.

Alternatively, there may be employed a structure in which the intermediate push rods 252 are respectively held at a waiting position where the intermediate push rods 252 faces in the downwardly oblique direction and they can be made to swing and retreat downwardly when they are contacted with and pushed by the merchandise 207.

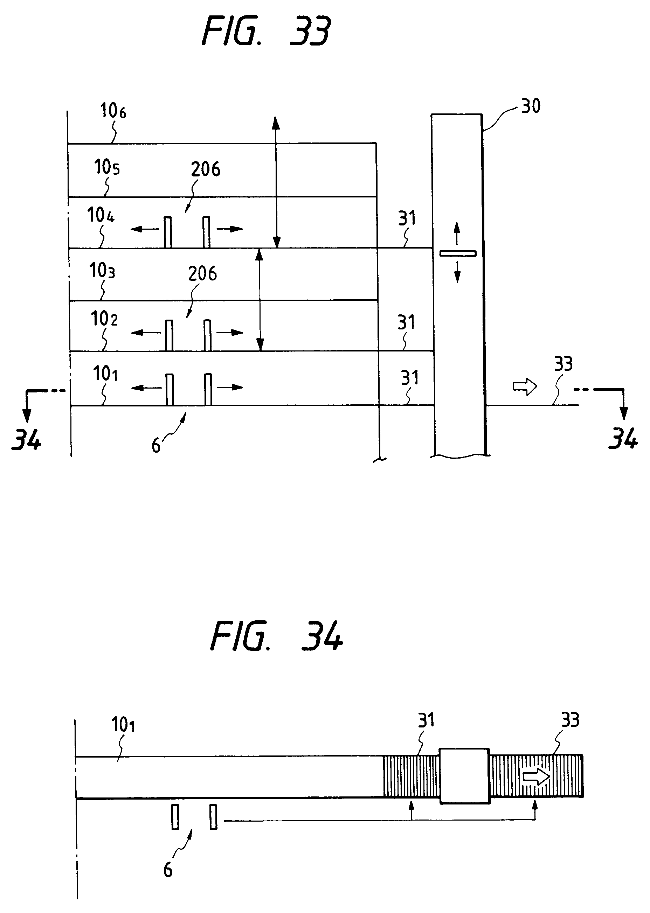

Although the merchandise handling and storage equipment of the present invention has been described with reference to the various embodiments taken alone, it goes without saying that the various embodiments may be combined as desired to constitute the merchandise handling and storage equipment, which also falls within the scope of the present invention. For example, in a merchandise storage equipment shown in Fig. 33, a merchandise handling truck 6 of the first embodiment is used as a merchandise handling equipment for a first, lowermost, shelf plate 10₁, and a stacker crane 206 of the fifth embodiment is used as a merchandise handling equipment common for second and third, two shelf plates 10₂, 10₃, and a stacker crane 206 of the fifth embodiment is used as a merchandise handling equipment common for forth, fifth and sixth three shelf plates 10₄, 10₅ and 10₆. In Fig. 34, reference numeral 30 designates a lifter; 31, a buffer conveyor; 33, a merchandise shipping conveyor. In case of this combination of the first and fifth embodiments, if the merchandise of a kind that must be put into and out of the shelf plate frequently is distributed to the first lower most shelf plate 10₁ and merchandise handling truck 6 rather than the other shelf plates 10₂ to 10₆ and stacker crane 206, then it is possible to store and ship the merchandise with high efficiency and high speed. In this connection, the merchandise handling truck 6 may be arranged such that the truck 6 can be moved beyond the lifter 31 to a position adjacent to the merchandise shipping conveyor 33 to transfer the merchandise directly from itself to the shipping conveyor 33.

## Claims

1. A merchandise handling equipment, comprising:
a carriage including a pallet for placing merchandise thereon and runnable in at least one of a first direction in which a shelf plate is elongated and a second direction orthogonal to said first direction;
a pair of left and right extendable and contractible fork members respectively disposed in either side end portion of said pallet;
a fork width adjusting mechanism for adjusting a mutually spaced distance between said pair of left and right fork members; and,
a fork extending and contracting mechanism for extending and contracting said pair of left and right fork members almost horizontally from said carriage to said shelf plate or vice versa,
wherein said pair of left and right fork members are operated to hold said merchandise between them and said pair of right and left fork members are then extended or contracted to thereby move said merchandise from one of said pallet and said shelf plate to the other.

2. A merchandise handling equipment as set forth in Claim 1, further comprising:
front and rear end projecting members respectively provided on and projected inwardly from front and rear ends of each of said left and right fork members.

3. A merchandise handling equipment as set forth in Claim 2, further comprising:
intermediate projecting members respectively provided on and projected inwardly from said left and right fork members, and located between said front and rear end projecting members,
wherein plural pieces of said merchandise can be held between said left and right fork members such that one is located within a space defined between said front end projecting members and said intermediate projecting members and another is located within a space defined between said intermediate projecting members and said rear end projecting members.

4. A merchandise handling equipment as set forth in Claim 3, wherein said intermediate projecting members are movable to respectively retreat into said left and right fork member, whereby said left and right fork member can hold one piece of said merchandise extending across said intermediate projecting member.

5. A merchandise handling equipment as set forth in Claim 2, wherein said front end projecting member of said left fork member is connected to said front end projecting member of said right fork member and said rear end projecting member of said left fork member is connected to said rear end projecting member of said right fork member, to thereby form telescopic, front and rear push rods.
